(19) **Europäisches Patentamt**
**European Patent Office**
**Office européen des brevets**

(11) **EP 1 393 012 B1**

(12) **EUROPÄISCHE PATENTSCHRIFT**

(45) Veröffentlichungstag und Bekanntmachung des Hinweises auf die Patenterteilung:
**16.02.2011 Patentblatt 2011/07**

(21) Anmeldenummer: **02769140.1**

(22) Anmeldetag: **07.05.2002**

(51) Int Cl.:
**G01B 5/008** (2006.01)

(86) Internationale Anmeldenummer:
**PCT/EP2002/005027**

(87) Internationale Veröffentlichungsnummer:
**WO 2002/090879 (14.11.2002 Gazette 2002/46)**

(54) **VERFAHREN ZUM BESTIMMEN VON EIGENSCHAFTEN EINES KOORDINATENMESSGERÄTS SOWIE TESTOBJEKT HIERZU**

METHOD FOR DETERMINING THE PROPERTIES OF A CO-ORDINATE MEASURING DEVICE AND TEST OBJECT ASSOCIATED THEREWITH

PROCEDE DE DETERMINATION DE PROPRIETES D'UN APPAREIL DE MESURE DE COORDONNEES ET OBJET DE TEST CORRESPONDANT

(84) Benannte Vertragsstaaten:
**DE FR GB IT**

(30) Priorität: **07.05.2001 DE 10122080**

(43) Veröffentlichungstag der Anmeldung:
**03.03.2004 Patentblatt 2004/10**

(73) Patentinhaber: **Carl Zeiss Industrielle Messtechnik GmbH**
**73447 Oberkochen (DE)**

(72) Erfinder:
• **HAGENEY, Theo**
**73432 Aalen (DE)**

• **PRESSEL, Hans-Gerd**
**73434 Aalen (DE)**

(74) Vertreter: **Schorr, Frank Jürgen et al**
**Diehl & Partner GbR**
**Augustenstrasse 46**
**80333 München (DE)**

(56) Entgegenhaltungen:
| | |
|---|---|
| EP-A- 0 275 428 | DE-A- 4 106 168 |
| DE-A1- 3 325 397 | DE-A1- 4 424 871 |
| US-A- 4 369 581 | US-A- 4 613 866 |
| US-A- 4 721 388 | US-A- 4 763 507 |
| US-A- 4 819 339 | US-A- 5 151 870 |
| US-A- 5 430 948 | US-A- 5 450 335 |
| US-A- 5 773 950 | |

**Beschreibung**

Die Erfindung betrifft ein Verfahren zum Bestimmen von Eigenschaften eines Koordinatenmeßgeräts durch Antasten eines Testobjekts.

Herkömmliche Koordinatenmeßgeräte weisen eine Werkstückhalterung zur Anbringung eines zu vermessenden bzw. anzutastenden Werkstückes auf, wobei die Werkstückhalterung an einer Basis des Koordinatenmeßgeräts fest angebracht ist oder bezüglich der Basis um eine Drehachse drehbar gehaltert ist. An der Basis ist ein in drei Raumrichtungen verlagerbarer Tastkopf mit einer Tastspitze zum Antasten des Werkstücks gehalten. Zur Bestimmung von Koordinaten einer Oberfläche des Werkstücks wird der Tastkopf bezüglich der Basis und damit bezüglich der Werkstückhalterung räumlich verfahren, bis eine Spitze des Taststiftes, welche beispielsweise die Gestalt einer Kugel haben kann, mit der Oberfläche des Werkstückes in Berührungskontakt kommt. Ein solcher Berührungskontakt wird von dem Tastkopf registriert, und es ist ein Sensorsystem vorgesehen, um dann den Ort der Tastspitze in einem bezüglich der Basis festgelegten Koordinatensystem zu bestimmen: Hierzu werden von dem Sensorsystem ausgegebene Meßwerte in die Koordinaten umgerechnet, wobei in diese Umrechnung Eigenschaften des Koordinatenmeßgeräts, wie etwa die geometrische Beziehung von dessen Komponenten relativ zueinander, eingehen. Diese Eigenschaften sind auch bei präziser Fertigung der Komponenten des Koordinatenmeßgeräts zeitlich nicht stabil und verändern sich insbesondere aufgrund thermisch bedingter Geometrieänderungen des Koordinatenmeßgeräts oder aufgrund einer Hysterese eines Endschalters zur Festlegung eines Referenzpunktes für das Koordinatensystem.

Deshalb wird ein Koordinatenmeßgerät, um dessen Präzision, das heißt dessen Übereinstimmung der angezeigten Koordinatenmeßwerte mit tatsächlichen Koordinatenwerten, zu erhöhen bzw. zu verifizieren, nach seiner Fertigung und nachfolgend in bestimmten Zeitabständen, eingemessen bzw. kalibriert.

Bei Koordinatenmeßgeräten mit einer solchen Geometrie, daß Träger für den Tastkopf in drei paarweise zueinander orthogonalen Raumrichtungen linear verschiebbar sind, ist es von Bedeutung, Abweichungen von der Orthogonalität durch ein Einmeßverfahren zu erfassen, um entsprechende Korrekturen an den angezeigten Koordinatenwerten vorzunehmen. Ferner ist es hier von Bedeutung, Abweichungen der von dem Sensorsystem in den jeweiligen Raumrichtungen gelieferten Meßwerten von SollWerten zu erfassen, um auch hier entsprechende Korrekturen an den angezeigten Koordinatenwerten vornehmen zu können. Bei einem Koordinatenmeßgerät mit einer um eine Drehachse drehbaren Werkstückhalterung ist es auch von Bedeutung, die Lage der Drehachse im Koordinatensystem der Basis zu kennen.

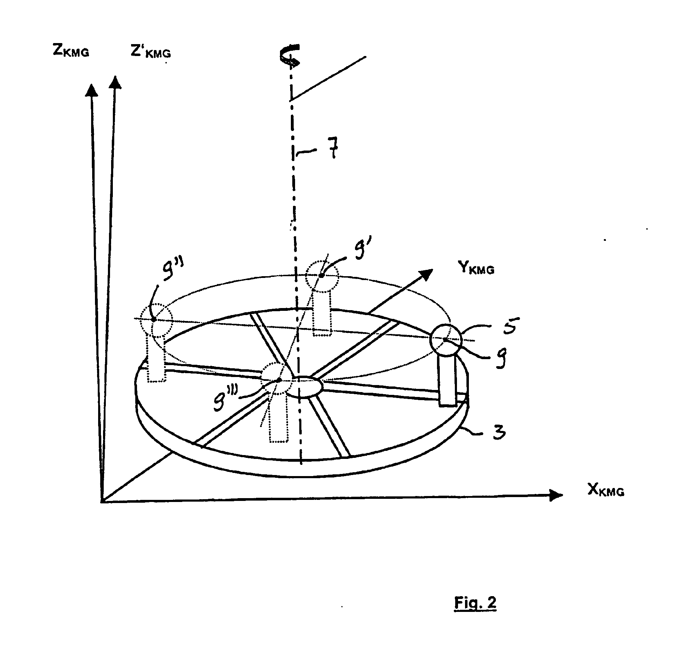

Zur Bestimmung der Drehachse einer bezüglich der Basis drehbaren Werkstückhalterung, das heißt bei einem Koordinatenmeßgerät mit sogenanntem Drehtisch, sieht die Norm VDI/VDE 2617 Blatt 4 bei dem sogenannten "3D-$\alpha$ Test" zur Einmessung der Drehachse im Koordinatensystem der Basis ein Verfahren vor, welches unter Bezugnahme auf Figur 2 erläutert wird. Auf einem Drehtisch 3 wird eine Kugel 5 außerhalb einer Drehachse 7 des Drehtischs dicht über der Drehtischoberfläche fest montiert. Die Oberfläche der Kugel wird mit der Tastspitze des Koordinatenmeßgeräts abgetastet, um hieraus den Mittelpunkt 9 der Kugel zu bestimmen. Die Bestimmung des Kugelmittelpunkts wird in wenigstens drei verschiedenen Drehstellungen des Drehtischs bezüglich der Drehachse wiederholt. Mit den so gewonnenen Kugelmittelpunkten 9, 9', 9", 9''' werden eine Ebene und ein Kreismittelpunkt bestimmt. Das Lot im Kreismittelpunkt auf die Ebene ist dann die Drehachse des Drehtischs im Koordinatensystem ($x_{KMG}$, $y_{KMG}$, $z_{KMG}$) des Koordinatenmeßgeräts. Selbst dann, wenn eine zu den Richtungen $x_{KMG}$ und $y_{KMG}$ senkrechte Verschiebeachse $z'_{KMG}$ des Koordinatenmeßgeräts nicht exakt orthogonal zu den Richtungen $x_{KMG}$ und $y_{KMG}$ steht, ergibt dieses Verfahren die korrekte Orientierung der Drehtischachse im rechtwinkligen Koordinatensystem des Koordinatenmeßgeräts, das heißt die eingemessene Drehtischachse stimmt mit der mechanischen Rotationsachse des Drehtischs überein.

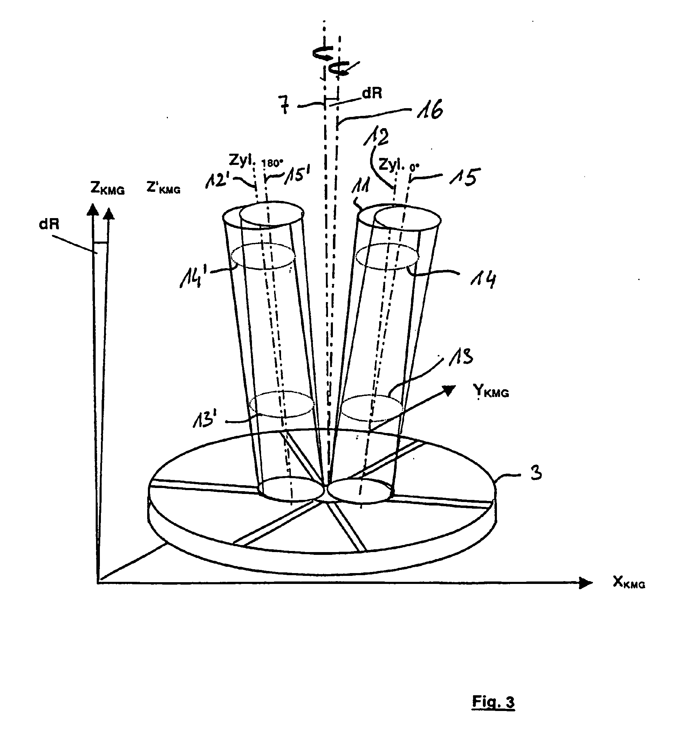

Werden nachfolgend allerdings beispielsweise zylindrische Werkstücke vermessen, die sich in z-Richtung von der Drehtischoberfläche weg erstrecken, so ergeben sich aufgrund der Rechtwinkligkeitsabweichung zwischen den Richtungen $z'_{KMG}$ und $y_{KMG}$ bzw. $x_{KMG}$ mit zunehmendem Abstand von der Drehtischoberfläche Meßfehler. In einem solchen Fall wird die Drehtischachse ebenfalls bevorzugt mit dem nachfolgend anhand der Figur 3 erläuterten herkömmlichen Verfahren bestimmt:

Es wird auf dem Drehtisch 3 mit mechanischer Rotationsachse 7 ein zylindrischer Prüfkörper 11 fest angebracht, wobei dessen Zylinderachse mit 12 bezeichnet ist. In einer Ebene nahe der Drehtischoberfläche wird ein Umfang 13 des Zylinders abgetastet, und in einer von der Drehtischoberfläche weiter entfernten Ebene wird ein weiterer Umfang 14 des Zylinders abgetastet. Aus den beiden Umfängen bzw. Querschnitten 13, 14 wird die Zylinderachse ermittelt. Da allerdings die Verschiebeachse $z'_{KMG}$ des Koordinatenmeßgeräts um einen Winkel dR von der zu den Richtungen $x_{KMG}$ und $y_{KMG}$ orthogonalen Richtung $z_{KMG}$ abweicht, fällt die berechnete Zylinderachse 15 nicht mit dessen mechanischer Zylinderachse 12 zusammen. Es wird nun der Drehtisch um 180° verdreht, und in der neuen Drehstellung wird ein unterer Querschnitt 13' und ein oberer Querschnitt 14' vermessen. Es ergibt sich hieraus eine in dieser Drehstellung ermittelte Zylinderachse 15'. Es wird sodann eine Drehtischachse 16 berechnet, welche die Symmetrieachse zu den in den beiden Drehstellungen ermittelten Zylinderachsen 15 und 15' bildet. Die so berechnete Drehtischachse 16 weicht ebenfalls um den Winkel dR von der mechanischen Rotationsachse 7 des Drehtischs ab. Allerdings werden bei der so ermittelten Drehtischachse Meßfehler, die aufgrund der Rechtwinkligkeitsabweichung dR erzeugt werden, bei der Antastung von zylindrischen Werkstücken, die sich in z-Richtung erstrecken, unterdrückt. Dieses Verfahren setzt aber auch hohe Anforderungen an die Präzision des zylindrischen Prüfkörpers 11, welche unter Umständen ebenfalls schwer zu erfüllen sind. Ferner ist das Ergebnis auch in anderer Beziehung ungünstig, da ja die berechnete Drehtischachse von der mechanischen Rotationsachse abweicht. Die Bestimmung der Zylinderachse 15 ist dabei auch limitiert durch die Präzision, mit der die Querschnitte 13, 14 ausgemessen werden. Diese Präzision wird auch limitiert durch eine Rechtwinkligkeitsabweichung zwischen den Achsen $x_{KMG}$ und $y_{KMG}$ sowie Längenmeßabweichungen in den Richtungen $x_{KMG}$ und $y_{KMG}$.

US 4,369,581 offenbart ein Koordinatenmessgerät und ein Testobjekt mit einem Testkörper, welcher um eine Drehachse drehbar ist.

US 4,763,507 und US 5,430,948 offenbaren jeweils ein Testobjekt mit zwei Testkörpern, welche um eine Drehachse drehbar sind, sich bezüglich der Drehachse einander gegenüberliegen und verschwenkbar sind, so dass sie in Achsrichtung einen einstellbaren Abstand voneinander aufweisen.

DE 41 06 168 A1 offenbart ein Koordinatenmessgerät mit einem Drehtisch und einem Testobjekt mit zwei Testkörpern, die sich bezüglich der Drehachse in etwa diametral mit Abstand gegenüberliegen und in Achsrichtung einen Abstand voneinander ausweisen. Ferner offenbart ist in diesem Dokument ein Verfahren, gemäß welchem die Testkörper abgetastet werden, um Eigenschaften des Koordinatenmessgeräts zu berechnen.

Es ist eine Aufgabe der vorliegenden Erfindung, Verfahren zum Bestimmen von Eigenschaften eines Koordinatenmessgeräts durch Antasten eines Testobjekts mit zwei Testkörpern vorzuschlagen, welche um eine Drehachse drehbar sind, sich bezüglich der Drehachse gegenüberliegen und in Richtung der Drehachse einen Abstand voneinander aufweisen, um mehrere Fehler des Koordinatenmessgeräts zu bestimmen.

Gemäß einem hier ebenfalls offenbarten Beispiel ist ein Verfahren zum Bestimmen von Eigenschaften eines Koordinatenmessgeräts vorgesehen, welches einen Drehtisch aufweist . Es setzt hierzu ein Testobjekt ein, welches wenigstens zwei Testkörper umfaßt, die eine solche Oberfläche aufweisen, daß durch Antasten der Oberfläche mit der Tastspitze Koordinaten von wenigstens einem bezüglich der Oberfläche des Testkörpers fest bzw. reproduzierbar angeordneten Bezugspunkt des Testkörpers im Koordinatensystem der Basis bestimmbar sind. Ein möglicher Testkörper ist eine präzise gefertigte Kugel oder ein Quader. Es ist auch möglich, einen selbstzentrierenden Antastkörper, wie etwa ein Kugeltripel oder einen Konus einzusetzen. Wird beispielsweise eine Kugel als Testkörper eingesetzt, so kann durch Antasten der Kugeloberfläche dann eindeutig der Kugelmittelpunkt im Koordinatensystem der Basis bestimmt werden. Die beiden Testkörper werden derart an der Werkstückhalterung bzw. auf dem Drehtisch angebracht, daß sie in Richtung der Drehachse einen Abstand voneinander aufweisen.

Es wird sodann ein Punktsatz aus Punkten im Koordinatensystem der Basis bestimmt, und zwar derart, daß die Punkte des Punktsatzes den Bezugspunkten der Testkörper in wenigstens drei verschiedenen Drehstellungen entsprechen. Aus den derart bestimmten Punkten des Punktsatzes, welche den Bezugspunkten mehrerer Testkörper in mehreren Drehstellungen entsprechen, wird sodann die Drehachse im Koordinatensystem der Basis berechnet.

Vorzugsweise wird sodann bezüglich der Punkte, die den Bezugspunkten eines jeden Testkörpers entsprechen, ein Zentrum berechnet. Aufgrund des Abstands der wenigstens zwei Testkörper in Richtung der Drehachse weisen auch die berechneten wenigstens drei Zentren einen Abstand in Richtung der Drehachse auf, und die Drehachse selbst wird im Koordinatensystem der Basis als die Gerade berechnet, welche durch die Zentren verläuft.

Bei der Verwendung von lediglich zwei Testkörpern ist es immer eindeutig möglich, die durch die beiden Zentren verlaufende Gerade zu bestimmen. Bei drei oder mehr Testkörpern liegen die berechneten Zentren aufgrund von Meßfehlern und anderen Abweichungen im allgemeinen nicht exakt auf einer Geraden. Die "durch" die berechneten Zentren verlaufende Gerade wird dann, wie in der Technik üblich, als die Gerade berechnet, welche mit möglichst geringen Abständen an den Zentren vorbei läuft, wobei hierzu übliche Optimierungs- und Wichtungsmethoden eingesetzt werden können.

Zur Berechnung des die Drehachse verkörpernden Zentrums der entsprechenden Punkte des Punktesatzes sind eine Vielzahl von Möglichkeiten denkbar. Beispielhaft herausgegriffen seien hier folgende Möglichkeiten erläutert:

Es wird ein Kreis bestimmt, der durch die entsprechenden Punkte verläuft. Auch hier ist die Bestimmung des Kreises dann jedenfalls eindeutig, wenn lediglich drei Bezugspunkte in drei verschiedenen Drehstellungen vermessen wurden. Wurden vier oder mehr Bezugspunkte vermessen, liegen die entsprechenden Punkte im allgemeinen nicht exakt auf einem Kreis. Auch hier kann dann unter Berücksichtigung üblicher Optimierungskriterien ein Kreis gefunden werden, dessen Mittelpunkt die Drehachse möglichst genau wiedergibt. Entsprechend ist es auch möglich, bei der Vermessung von vier oder mehr Punkten eine Ellipse zu bestimmen, die durch die entsprechenden Punkte verläuft, und das Zentrum als das Zentrum der Ellipse zu berechnen. Neben Kreis und Ellipse sind, bei der Verwendung einer höheren Zahl von Drehstellungen auch andere Kurvenformen höherer Ordnung denkbar, welche ein berechenbares Zentrum aufweisen.

Es ist ebenfalls möglich, die Drehstellungen, in denen die Bezugspunkte vermessen werden, derart zu bestimmen, daß einer jeden Drehstellung eine weitere Drehstellung diametral gegenüberliegt. Zwischen den aus diametral gegenüberliegenden Drehstellungen bestimmten Punkten werden durch das Zentrum verlaufende Geraden berechnet. Bei mehreren solcher Geraden ergibt sich das Zentrum dann als der Schnittpunkt der Geraden.

Es ist möglich, zunächst einen ersten der Testkörper in den mehreren Drehstellungen zu vermessen und sodann den nächsten Testkörper in ebenfalls mehreren Drehstellungen zu vermessen. Im Hinblick auf eine erhöhte Genauigkeit ist es jedoch vorteilhaft, in einer jeden Drehstellung jeweils die Bezugspunkte sämtlicher Testkörper zu bestimmen.

Unter einem Aspekt betrifft die Erfindung ein Verfahren zum Bestimmen von Eigenschaften eines Koordinatenmeßgeräts, bei dem der Tastkopf mittels eines Trägersystems im Raum bewegbar ist, wobei das Trägersystem in drei Raumrichtungen (x, y, z) jeweils linear verschiebbare Träger aufweist und wobei die drei Raumrichtungen sich paarweise in etwa orthogonal zueinander erstrecken. Weist das Koordinatenmeßgerät zudem einen Drehtisch auf, wird auf dem Drehtisch das Testobjekt mit den wenigstens zwei Testkörpern derart angebracht, daß sich die beiden Testkörper in Projektion auf den Drehtisch bezüglich der Drehachse in etwa diametral gegenüberliegen. Weist das Koordinatenmeßgerät keinen Drehtisch auf, so wird auf dessen Werkstückhalterung ein Testobjekt angebracht, welches an einem Fuß zur Anbringung an der Werkstückhalterung eine relativ zu dem Fuß um eine Drehachse drehbare Baugruppe mit wenigstens zwei Testkörpern derart umfaßt, daß diese sich bezüglich der Drehachse in Projektion entlang der Drehachse diametral gegenüberliegen und in Richtung der Drehachse einen Abstand voneinander aufweisen.

Es werden sodann Bezugspunkte der Testkörper in mehreren Drehstellungen vermessen.

Mit diesem Verfahren sind Abweichungen des Winkels zwischen der x-Richtung und der z-Richtung vom rechten Winkel bestimmbar, indem aus den in wenigstens zwei Drehstellungen vermessenen Bezugspunkten ein Punktsatz ermittelt wird, dessen Punkte in etwa in der x-z-Ebene in der Anordnung eines Rechtecks liegen. In Projektion auf die x-z-Ebene liegen zwei der Punkte links der Drehachse und zwei der Punkte rechts der Drehachse, und es liegen zwei Punkte in etwa in einer oberen Ebene und zwei der Punkte in etwa in einer unteren Ebene. Es werden sodann vorzugsweise die Längen der Diagonalen des Rechtecks berechnet, woraus dann wiederum der Winkel zwischen der x-Richtung und der z-Richtung beziehungsweise die Abweichung dieses Winkels von 90° bestimmt werden kann.

Erfindungsgemäß werden die Punkte dieses Punktsatzes derart bestimmt, daß das Testobjekt durch Drehen um die Drehachse bezüglich der Basis derart ausgerichtet wird, daß die Bezugspunkte der Testkörper in etwa in der x-z-Ebene liegen und in dieser Drehstellung die Bezugspunkte durch Antasten der Testkörper ermittelt werden. Die ermittelten Bezugspunkte bilden dann einen Teil der Punkte des Punktsatzes. Sodann wird das Testobjekt um die Drehachse um 180° gedreht, es werden in dieser Stellung erneut die Bezugspunkte bestimmt und als weitere Punkte dem Punktsatz hinzugefügt.

Ferner ist vorgesehen, daß der Punktsatz Symmetriepunkte zwischen zwei in verschiedenen Drehstellungen bestimmten Bezugspunkten des selben Testkörpers umfaßt. Die beiden Drehstellungen werden beispielsweise derart angefahren, daß zunächst wenigstens ein Bezugspunkt der Testkörper in der y-z-Ebene ausgerichtet wird. Sodann wird das Testobjekt um 45° aus der y-z-Ebene herausbewegt, es werden die Bezugspunkte der Testkörper bestimmt, und nachfolgend wird das Testobjekt um 90° weiter um die Drehachse verdreht, woraufhin die Bezugspunkte nochmals ermittelt werden. Die Punkte des Punktsatzes werden dann als die Mittelpunkte von Verbindungsgeraden der Bezugspunkte der selben Testkörper in den beiden Drehstellungen berechnet.

Das Verfahren wird ferner ebenfalls dazu eingesetzt, den Winkel zwischen der x-Richtung und der y-Richtung bzw. die Abweichung dieses Winkels vom rechten Winkel zu bestimmen. Hierzu werden die Bezugspunkte der Testkörper in wenigstens zwei verschiedenen Drehstellungen vermessen. Die beiden Drehstellungen werden vorzugsweise derart ausgewählt, daß eine Verbindungsgerade zwischen den beiden Testkörpern in Projektion auf die x-y-Ebene jeweils unter 45° zur x-Richtung angeordnet ist. Es werden hierbei die Abstände zwischen verschiedenen Testkörpern in einer jeden Drehstellung berechnete, und aus den den verschiedenen Drehstellungen zugeordneten Abständen wird dann die Abweichung des Winkels zwischen der x-Richtung und der y-Richtung vom rechten Winkel berechnet.

Ferner wird das verfahren auch dazu eingesetzt, einen Unterschied zwischen Skalen des Meßsystems in x-Richtung und in y-Richtung zu ermitteln. Hierzu wird vorzugsweise wenigstens ein Punktsatz aus lediglich einem Testkörper zugeordneten Punkten ermittelt, wobei von diesen Punkten zwei Punkte sich auf der y-z-Ebene bezüglich der Drehachse diametral gegenüberliegen und sich zwei weitere Punkte auf der x-z-Ebene bezüglich der Drehachse diametral gegenüberliegen. Es wird dann vorzugsweise jeweils der Abstand zwischen den sich auf einer Ebene der Drehachse gegenüberliegenden Punkten berechnet und vorzugsweise aus einem Unterschied zwischen den Abständen wird die Abweichung zwischen den Skalen des Meßsystems in x- und y-Richtung berechnet.

Um Abweichungen zwischen den Skalen des Meßsystems in den x-und y-Richtungen auch absolut erfassen zu können, ist an dem Testobjekt ferner wenigstens ein Endmaß einer vorbestimmten Länge vorgesehen, so daß ein Abstand zwischen den Bezugspunkten verschiedener Testkörper relativ zu der vorbestimmten Länge des Endmaßes bestimmt werden kann. Das Endmaß ist vorzugsweise in einer Richtung orientiert, welche sich in etwa parallel zu einer Verbindungslinie zwischen verschiedenen Testkörpern erstreckt.

Ferner wird hier ein Testobjekt zum Bestimmen von Eigenschaften insbesondere eines Koordinatenmeßgeräts offenbart, welches keinen Drehtisch aufweist. Das Testobjekt weist einen Fuß zur Anbringung an der Werkstückhalterung des Koordinatenmeßgeräts und eine relativ zu dem Fuß um eine Drehachse drehbare Baugruppe mit wenigstens zwei Testkörpern auf, die in Richtung der Drehachse mit Abstand voneinander und bezüglich der Drehachse im wesentlichen diametral gegenüberliegend angeordnet sind. Dieses Testobjekt kann auf der Werkstückhalterung des Koordinatenmeßgeräts angeordnet werden, und es können dann in mehreren Drehstellungen der Baugruppe relativ zu dem Fuß Bezugspunkte der einzelnen Testkörper bestimmt werden, um die Eigenschaften des Koordinatenmeßgeräts insbesondere nach einem der vorangehend beschriebenen Verfahren zu bestimmen.

An dem Testobjekt ist vorzugsweise ein Antrieb vorgesehen, um die Baugruppe um die Drehachse relativ zu dem Fuß zu drehen, um hierdurch die verschiedenen Drehstellungen automatisiert anfahren zu können. Vorzugweise weist das Testobjekt auch eine den Antrieb betätigende Schalteinrichtung auf, "welche durch eine Bewegung des Koordinatenmeßgeräts und insbesondere durch dessen Tastspitze schaltbar ist.

Im folgenden werden Ausführungsbeispiele der Erfindung anhand von Zeichnungen näher erläutert. Hierbei zeigt:

Figur 1    ein Koordinatenmeßgerät, dessen Eigenschaften mit dem erfindungsgemäßen Verfahren bestimmt werden können,

Figur 2    eine Darstellung zur Erläuterung eines herkömmli- chen Verfahrens zum Einmessen einer Drehtischachse des Koordinatenmeßgeräts,

Figur 3    eine Darstellung zur Erläuterung einer Variante des im Zusammenhang mit Figur 2 erläuterten her- kömmlichen Verfahrens,

Figur 4    eine schematische Darstellung eines Meßobjekts zur Anordnung auf einem Drehtisch des in Figur 1 gezeigten Koordinatenmeßgeräts,

Figur 5    eine Darstellung zur Erläuterung eines Verfahrens zum Einmessen einer Drehachse des in Figur 1 gezeigten Koordinatenmeßgeräts,

Figur 6    eine Darstellung zur Erläuterung einer Ausfüh- rungsform des erfindungsgemäßen Verfahrens zum Bestimmen eines Winkels zwischen einer z-Richtung und einer y-Richtung bzw. der z-Richtung und einer x-Richtung bei dem in Figur 1 gezeigten Koordina- tenmeßgerät,

Figur 7    eine Detaildarstellung zu Figur 6,

Figur 8    eine weitere Detaildarstellung zu Figur 6,

Figur 9    eine Darstellung zur Erläuterung einer Ausfüh- rungsform eines erfindungsgemäßen Verfahrens zur Bestimmung eines Winkels zwischen der x-Richtung und der y-Richtung und

Figur 10    eine Ausführungsform eines erfindungsgemäßen Test- objekts.

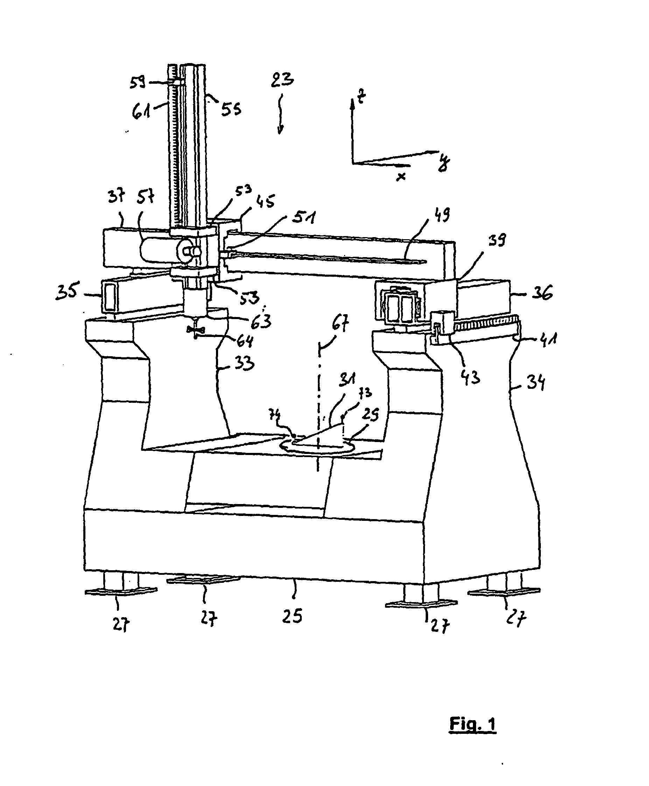

Figur 1 zeigt ein Koordinatenmeßgerät 23, dessen Eigenschaften mit einer Ausführungsform des erfindungsgemäßen Verfahrens bestimmt werden können. Das Koordinatenmeßgerät 23 umfaßt eine Basis 25 mit Füßen 27 zum Aufstellen auf einem horizontalen Boden. Die Basis 25 trägt in ihrer Mitte einen Drehtisch 29, der als Werkstückhalterung zur Aufnahme eines zu vermessenden Werkstücks dient. In Figur 1 ist auf dem Drehtisch 29 ein Testobjekt 31 angebracht, welches als Kalibrierkörper dient, um die Eigenschaften des Koordinatenmeßgeräts 23 zu bestimmen.

Beidseits des Drehtischs 29 erstrecken sich an der Basis 25 Streben 33, 34 nach oben, welche zwei beidseits des Drehtischs angeordnete in einer horizontalen y-Richtung und parallel zueinander sich erstreckende Längsführungen 35, 36 tragen. In Horizontalrichtung orthogonal zu den Längsführungen 35, 36 erstreckt sich eine Querführung 37 in x-Richtung, welche an den Längsführungen 35', 36 in y-Richtung linear verschiebbar gelagert ist. Hierzu ist an einem Ende der Querführung 37 ein Führungsprofil 39 vorgesehen, welches die Längsführung 36 von oben U-förmig umgreift und an dieser beispielsweise mittels Luftkissen geführt ist. Mit ihrem anderen Ende ist die Querführung 37 auf der Oberseite der Längsführung 35 abgestützt und auch gegenüber dieser in y-Richtung verschiebbar gelagert. Durch einen motorischen Antrieb kann die Querführung 37 entlang der Längsführung 36 verschoben werden, wobei eine entsprechende Verschiebestellung in y-Richtung durch ein Meßsystem erfaßt werden kann, welches einen an der Basis festgelegten Maßstab 41 und einen zugehörigen an dem U-Profil 39 festgelegten Sensor 43 zum Ablesen des Maßstabs umfaßt.

An der Querführung 37 ist ein Führungsprofil 45 in x-Richtung linear verschiebbar gelagert, wobei die Verschiebestellung in x-Richtung ebenfalls durch das Meßsystem erfaßt wird, welches hierzu einen an der Querführung 37 angebrachten Maßstab 49 und einen an dem Führungsprofil 45 festgemachten zugehörigen Sensor 51 aufweist.

An dem Führungsprofil 45 sind zwei weitere mit Abstand voneinander angeordnete Führungsprofile 53 vorgesehen, welche eine sich in z-Richtung erstreckende Stange 55 über einen Motor 57 verschiebbar lagern. Die Verschiebestellung der Stange 55 in z-Richtung wird über einen an der Stange 31 vorgesehenen Sensor 59 erfaßt, der die Position an einem an der Vertikalführung 53 festgelegten Maßstab 61 abliest.

An einem unteren Ende der Stange 55 ist ein Tastkopf 63 angebracht, welcher einen Taststift 64 mit mehreren Tastspitzen zum Antasten eines auf dem Drehtisch 29 angeordneten Werkstücks bzw. des dargestellten Kalibrierkörpers 31 aufweist.

Auch dem Drehtisch 29 ist ein in Figur 1 nicht dargestellter Antrieb zugeordnet, um den Drehtisch 29 relativ zur Basis 25 um eine Drehachse 67 zu verdrehen. Die Drehachse 67 erstreckt sich in z-Richtung. Ferner ist dem Drehtisch 29 auch ein nicht dargestellter Sensor zur Erfassung der Drehstellung des Drehtischs bezüglich der Basis zugeordnet.

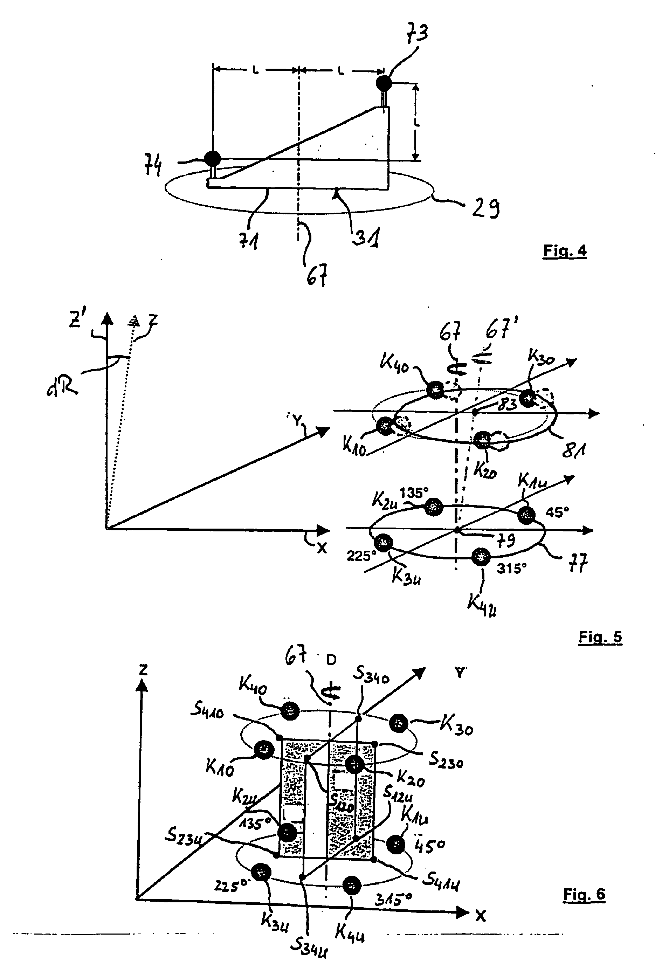

Wenn während einer Messung der Tastkopf 63 einen Berührungskontakt zwischen der Tastspitze 64 und der Oberfläche des angetasteten Werkstücks registriert, werden die Sensoren 43, 51 und 59 für die x-, y- bzw. z-Richtung sowie der Sensor für die Drehstellung des Drehtischs 29 abgelesen, um die Koordinate des Berührpunkts zwischen Tastspitze 64 und angetastetem Werkstück aus den entsprechenden Koordinatenmeßwerten in einem bezüglich der Basis 25 festgelegtem Koordinatensystem zu bestimmen. Es ist auch möglich, diese Koordinatenwerte in Werte eines Koordinatensystems umzurechnen, welches an dem Drehtisch 29 festgelegt ist. Für diese Berechnung der Koordinatenwerte ist die Kenntnis der Geometrie des Koordinatenmeßgeräts 23 notwendig. Diese Geometrie ist im wesentlichen durch die x-Richtung, die y-Richtung und die z-Richtung sowie die Lage der Drehachse 67 im Raum bestimmt. Im Rahmen der Montagegenauigkeit sind die x-, y- und z-Richtungen möglichst paarweise orthogonal zueinander ausgerichtet, und die Drehachse 67 ist möglichst parallel zur z-Achse ausgerichtet. Diese Ausrichtungen sind jedoch in der Regel nicht exakt erfüllt, und sie unterliegen auch zeitlichen Änderungen, beispielsweise in Folge von Temperatureinflüssen. Abweichungen von diesen Ausrichtungen können erfaßt werden, um entsprechende Korrekturen an den errechneten Koordinatenwerten vorzunehmen. Zur Erfassung dieser Abweichungen sind die nachfolgend beschriebenen Ausführungsformen des erfindungsgemäßen Verfahrens vorgesehen. Diese Verfahren nutzen das in Figur 4 näher dargestellte Testobjekt 31 als Kalibrierkörper.

Das Testobjekt 31 umfaßt einen Sockel 71, an dem zwei mit hoher Präzision gefertigte Kugeln 73 und 74 mit Abstand voneinander fest angebracht sind. Der Sockel 71 wird auf dem Drehtisch 29 derart angebracht, daß beide Kugeln 73, 74 mit einem Abstand L von 206mm von der Drehachse 67 angeordnet sind. An dem Sockel 71 sind die Kugeln 73 und 74 derart festgemacht, daß sie in Richtung der Drehachse 67 ebenfalls einen Abstand L von 206mm aufweisen. Ferner wird das Testobjekt 31 auf dem Drehtisch 29 so ausgerichtet, daß eine Verbindungslinie zwischen den beiden Kugeln 73, 74 die Drehachse 67 in etwa schneidet.

Durch Antasten der Oberflächen der Kugeln 73, 74 an mehreren Stellen können die Koordinaten der entsprechenden Oberflächenpunkte im Koordinatensystem des Meßgeräts bestimmt werden. Aus mehreren dieser Oberflächenpunkte ist dann das Zentrum der Kugeln 73, 74 eindeutig berechenbar. Derartig berechnete Kugelzentren werden nachfolgend mit dem Buchstaben K bezeichnet, wobei ein Index "o" das Zentrum der oberen Kugel 73 und ein Index "u" das Zentrum der unteren Kugel 74 bezeichnet.

Ein Verfahren zum Einmessen der Drehachse 67 ist nachfolgend unter Bezugnahme auf Figur 5 erläutert.

In Figur 5 sind die x-Richtung, die y-Richtung, das heißt die Erstreckungsrichtungen der Querführung 37 und der Längsführung 36, sowie eine zu den x- und y-Richtungen jeweils orthogonale Richtung z' dargestellt. Die z-Richtung des Koordinatenmeßgeräts, das heißt die Verschieberichtungen der Stange 55, erstreckt sich jedoch nicht exakt parallel zur Richtung z', sondern weicht von dieser um eine Winkelabweichung dR ab.

Das Testobjekt 31 wird durch Betätigen des Drehtischs 29 in vier verschiedene Drehstellungen bezüglich der Basis gebracht, in denen eine Verbindungslinie zwischen der unteren Kugel 74 und der Drehachse unter 45°, 135°, 225° bzw. 315° zur x-Richtung angeordnet ist. In einer jeden Drehstellung wird das Zentrum $K_u$ der unteren Kugel 74 durch Antasten derselben bestimmt. In Figur 5 sind die in den vier Drehstellungen ermittelten Zentren der unteren Kugel 74 mit $K_{1u}$, $K_{2u}$, $K_{3u}$ bzw. $K_{4u}$ bezeichnet.

Es wird sodann ein Kreis 77 berechnet, der durch die vier Zentren $K_{1u}$ ... $K_{4u}$ verläuft. Die mechanische Rotationsachse 67 des Drehtischs 29 kann dann bestimmt werden, indem die Normale auf die Ebene der Zentren $K_{1u}$ ... $K_{4u}$ bestimmt wird, welche durch das Zentrum 79 des Kreises 77 verläuft.

Wie vorangehend im Zusammenhang mit Figur 3 erläutert, ist eine derartige Bestimmung der Drehachse für die Berechnung von Koordinaten eines sich in z-Richtung erstreckenden Werkstücks dann nicht immer geeignet, wenn die z-Richtung des Koordinatenmeßgeräts von der orthogonal zu den x- und y-Richtungen ausgerichteten Richtung z' abweicht (dR). Deshalb wird in dem hier beschriebenen Verfahren eine der Winkelabweichung dR Rechnung tragende Drehachse 67' berechnet. Hierzu wird in einer jeden Drehstellung des Testobjekts 31 auch das Zentrum der oberen Kugel 73 durch mehrmaliges Antasten derselben bestimmt. Diese Zentren sind in Figur 5 mit $K_{1o}$ ... $K_{4o}$ bezeichnet,

wobei die mechanische Position der oberen Kugel 73 in den vier Drehstellungen mit durchgezogenen Linien dargestellt sind. Aufgrund der Winkelabweichung dR erscheinen die Kugeln in diesen Drehstellungen für das Koordinatenmeßgerät an versetzten Positionen welche in Figur 5 mit gestrichelter Linie dargestellt sind. Es wird sodann ein Kreis 81 berechnet, welcher durch die gemessenen Zentren $K_{1o}$ ... $K_{4o}$ verläuft. Sodann wird ein Zentrum 83 des Kreises 81 und eine durch die Zentren 79 und 83 der beiden Kreise 77 bzw. 81 verlaufende Gerade wird als berechnete Drehachse 67' angenommen und als Drehachse für weiterfolgende Berechnungen von Koordinatenwerten eingesetzt.

Im Zusammenhang mit Figur 5 wurden vier verschiedene Drehstellungen beschrieben, in denen jeweils die Zentren der unteren und der oberen Kugel bestimmt werden, um die Zentren 79 und 83 zur Berechnung der Drehachse 67' zu bestimmen. Es ist jedoch auch möglich, die Zentren 79 und 83 durch die Ausmessung der Kugelzentren in drei Drehstellungen oder in vier oder mehr Drehstellungen zu berechnen. Die Zentren 79 und 83 können auch berechnet werden, indem nicht Kreise sondern Ellipsen oder Kurven höherer Ordnung errechnet werden, die durch die bestimmten Kugelzentren verlaufen. Auch ist es möglich, die Zentren 79 und 83 als Schnittpunkte von Geraden zu bestimmen, welche durch diametral gegenüberliegende Kugelzentren verlaufen. In Figur 6 wäre dies der Schnittpunkt zwischen den Geraden $K_{1o}$-$K_{3o}$ und $K_{2o}$-$K_{4o}$.

Ein Verfahren zur Bestimmung einer Abweichung des Winkels zwischen der z-Richtung und der x-Richtung bzw. der z-Richtung und der y-Richtung vom rechten Winkel ist nachfolgend unter Bezugnahme auf die Figuren 6, 7, und 8 erläutert.

Ähnlich wie bei dem im Zusammenhang mit Figur 5 erläuterten Verfahren werden auch hier die Zentren der Kugeln 73, 74 des Testobjekts 31 in vier verschiedenen Drehstellungen vermessen. In den vier verschiedenen Drehstellungen ist eine Verbindungslinie zwischen der unteren Kugel 74 und der Drehachse 67 unter 45°, 135°, 225° bzw. 315° zur x-Richtung angeordnet. Es werden zu einer jeden Drehstellung die Zentren $K_{1u}$ ... $K_{4u}$ und $K_{1o}$ ... $K_{4o}$ zu beiden Kugeln 74, 73 ermittelt. Wurde vorangehend die Lage der Drehachse gemäß dem im Zusammenhang mit der Figur 5 erläuterten Verfahren vermessen, so können auch die dort gewonnenen Werte für die Kugelzentren übernommen werden, ohne diese erneut zu vermessen.

Aus den Kugelzentren $K_{1u}$ ... $K_{4u}$ werden Symmetriepunkte berechnet, welche mittig auf einer Verbindungsgeraden zwischen zwei Kugelzentren liegen. Die Symmetriepunkte sind in Figur 6 mit "S" bezeichnet, wobei ein Index "u" angibt, daß es sich um einen Symmetriepunkt zwischen Kugelzentren der unteren Kugel 74 handelt und ein Index "o" angibt, daß es sich um einen Symmetriepunkt zwischen Kugelzentren der oberen Kugel 73 handelt. Ferner geben zwei Ziffern im Index an, zwischen welchen beiden Kugelzentren sich der entsprechende Symmetriepunkt mittig befindet. So bezeichnet $S_{34u}$ deh Symmetriepunkt, welcher sich mittig zwischen den Kugelzentren $K_{3u}$ und $K_{4u}$ befindet.

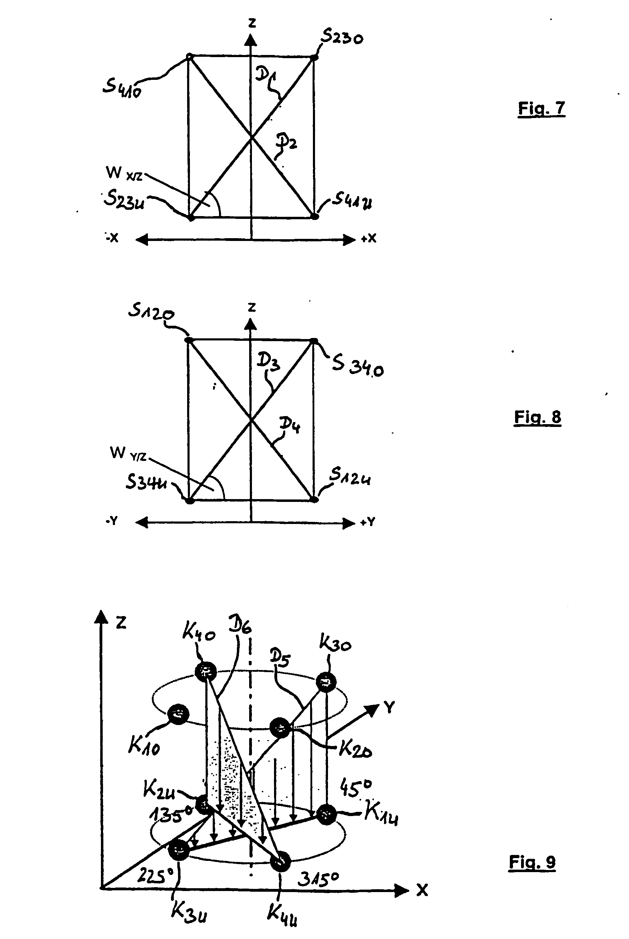

Aufgrund der Wahl der Drehstellungen zu 45°, 135°, 225° und 315° liegen die Symmetriepunkte in etwa in einer x-z-Ebene oder einer y-z-Ebene, welche im Idealfall die Drehachse 67 enthält und im allgemeinen, das heißt in Folge von Meßtoleranzen und einer Schiefstellung der Drehachse bzw. einer Rechtwinkligkeitsabweichung dR zwischen den x-, y- bzw. z-Richtungen, schneiden die x-z- bwz. die y-z-Ebene die Drehachse 67 innerhalb eines Meßvolumens über dem Drehtisch. Die x-z-Ebene mit den darin enthaltenen Symmetriepunkten $S_{23o}$, $S_{41o}$, $S_{23u}$ und $S_{41u}$ ist in Figur 7 separat dargestellt, und die y-z-Ebene mit den darin enthaltenen Symmetriepunkten $S_{34o}$, $S_{12o}$, $S_{34u}$ und $S_{12u}$ ist in Figur 8 separat dargestellt.

Es wird dann die Länge der Diagonalen $D_1$ zwischen den Symmetriepunkten $S_{23o}$ und $S_{23u}$, die Länge der Diagonalen $D_2$ zwischen den Symmetriepunkten $S_{41o}$ und $S_{41u}$ sowie ein Winkel $W_{x/z}$ zwischen der Diagonalen $D_1$ und der Horizontalen bzw. einer Verbindungslinie zwischen den Symmetriepunkten $S_{23u}$ und $S_{41u}$ bestimmt. Aus den Längen der Diagonalen $D_1$ und $D_2$ sowie dem Winkel $W_{x/z}$ kann die Abweichung xwz des Winkels zwischen der z-Richtung und der x-Richtung vom rechten Winkel gemäß folgender Formel bestimmt werden:

$$xwz[°] = \arctan \frac{D_1{}^2 - D_2{}^2}{(D_1 + D_2)^2 \cdot \sin W_{x/z} \cdot \cos W_{x/z}}$$

Zur Bestimmung der Abweichung ywz des Winkels zwischen der z-Richtung und der y-Richtung vom rechten Winkel wird aus den in der y-z-Ebene liegenden Punkten (vergleiche Figur 8) die Länge der Diagonalen $D_3$ zwischen den Punkten S34o und $S_{34u}$, die Länge der Diagonalen $D_4$ zwischen den Punkten $S_{12o}$ und $S_{12u}$ sowie ein Winkel $Wy_{/z}$ zwischen der Diagonalen $D_3$ und der Horizontalen bzw. einer Verbindungslinie wischen den, Punkten $S_{34u}$ und $S_{12o}$ berechnet. Hieraus berechnet sich die Rechtwinkligkeitsabweichung ywz gemäß der Formel:

$$ywz[°] = \arctan \frac{D_4{}^2 - D_3{}^2}{(D_3 + D_4)^2 \cdot \sin W_{Y/Z} \cdot \cos W_{Y/Z}}$$

In dem vorangehend beschriebenen Ausführungsbeispiel wurden die zur Berechnung der Rechtwinkligkeitsabweichungen xwz und ywz notwendigen Größen aus Punkten ermittelt, welche als Symmetriepunkte zwischen vorausgehend bestimmten Kugelzentren in verschiedenen Drehstellungen liegen. Es ist allerdings auch möglich, die Drehstellungen, in denen die Kugeln 72 und 73 vermessen werden, anders auszuwählen, und zwar derart, daß die Kugeln in zwei Drehstellungen in etwa auf der y-z-Ebene und in zwei weiteren Drehstellungen in etwa auf der x-z-Ebene angeordnet sind. Es können dann, ähnlich wie dies im Zusammenhang mit den Figuren 7 und 8 erläutert wurde, die Diagonalen $D_1$. $D_2$, $D_3$ und $D_4$ sowie die Winkel $W_{x/z}$ und $W_{y/z}$ bestimmt werden, um mit den obig angegebenen Formeln die Rechtwinkligkeitsabweichungen xwz und ywz zu bestimmen.

Ein Verfahren zur Bestimmung der Abweichung xwy des Winkels zwischen der x-Richtung und der y-Richtung vom rechten Winkel ist nachfolgend unter Bezugnahme auf Figur 9 erläutert. Hierzu werden wieder Kugelzentren, $K_{1u}$ ... $K_{4u}$ in Winkelstellungen von 45°, 135°, 225° und 315° entweder erneut bestimmt oder von vorangehenden Messungen übernommen. Es wird sodann eine Länge einer Diagonalen $D_5$ zwischen den Kugelzentren $K_{3o}$ und $K_{3u}$ sowie eine Länge einer Diagonalen $D_6$ zwischen den Kugelzentren $K_{4u}$ und $K_{4o}$ bestimmt. Diese Raumdiagonalen $D_5$ und $D_6$ werden in die x-y-Ebene projiziert, um aus dem Winkel und den Längen der projizierten Strecken die Rechtwinkligkeitsabweichung xwy zu bestimmen. Hierzu wird noch die Länge $\Delta Z$ benötigt, welche den Abstand der beiden Kugeln 74 und 73 in Vertikalrichtung angibt. $\Delta Z$ kann beispielsweise gemäß folgender Formel aus den Z-Komponenten der Kugelzentren $K_{1u}$ ... $K_{4u}$ berechnet werden:

$$\Delta Z = \frac{1}{4}\{Z(K_{3o}) - Z(K_{1u}) + Z(K_{4o}) - Z(K_{2u}) + Z(K_{1o}) - Z(K_{3u}) + Z(K_{2o}) - Z(K_{4u})\}$$

Aus den in den Drehstellungen 45° und 135° bestimmten Kugelzentren $K_{3o}$, $K_{4o}$, $K_{3u}$ und $K_{4u}$ kann dann die Abweichung des Winkels zwischen der x-Richtung und der y-Richtung von 90° gemäß folgender Formel berechnet werden:

$$xwy_{45°} = \arctan\left[\frac{(D_5{}^2 - D_6{}^2)}{\left(\sqrt{D_5{}^2 - \Delta Z^2} + \sqrt{D_6{}^2 - \Delta Z^2}\right)^2 \cdot \sin 45° \cdot \cos 45°}\right] - \arctan[\cos 45° \cdot \tan(xwz)]$$

Hier wird die Rechtwinkligkeitsabweichung xwy aus den Diagonalen $D_5$ und $D_6$ berechnet. Zur Erhöhung der Genauigkeit kann diese Rechtwinkligkeitsabweichung xwy noch aus weiteren Kombinationen von Diagonalen zwischen den in Figur 9 gezeigten Kugelzentren berechnet werden. Hierzu wird zunächst die Länge einer in Figur 9 der Übersichtlichkeit halber nicht gezeigten Diagonalen $D_7$ zwischen den Kugelzentren $K_{1o}$ und $K_{1u}$ und die ebenfalls nicht gezeigte Länge der Diagonalen $D_8$ zwischen den Kugelzentren $K_{2u}$ und $K_{2o}$ berechnet.

Aus den bei den Drehstellungen 135° und 225° bestimmten Kugelzentren berechnet sich xwy gemäß

$$xwy_{135°} = \arctan\left[\frac{(D_6{}^2 - D_7{}^2)}{\left(\sqrt{D_6{}^2 - \Delta Z^2} + \sqrt{D_7{}^2 - \Delta Z^2}\right)^2 \cdot \sin 135° \cdot \cos 135°}\right] + \arctan[\cos 135° \cdot \tan(ywz)]$$

und aus den bei den Winkelstellungen 225° und 315° bzw. 315° und 45° bestimmten Kugelzentren berechnen sich die Rechtwinkligkeitsabweichungen xwy gemäß den Formeln -

$$xwy_{225°} = arctan\left[\frac{\left(D_7{}^2 - D_8{}^2\right)}{\left(\sqrt{D_7{}^2 - \Delta Z^2} + \sqrt{D_8{}^2 - \Delta Z^2}\right)^2 \cdot \sin 225° \cdot \cos 225°}\right] - arctan\left[\cos 225° \cdot \tan(xwz)\right]$$

$$xwy_{315°} = arctan\left[\frac{\left(D_8{}^2 - D_5{}^2\right)}{\left(\sqrt{D_8{}^2 - \Delta Z^2} + \sqrt{D_5{}^2 - \Delta Z^2}\right)^2 \cdot \sin 315° \cdot \cos 315°}\right] + arctan\left[\cos 315° \cdot \tan(ywz)\right]$$

Hieraus kann eine gemittelte Rechtwinkligkeitsabweichung xwy bestimmt werden gemäß

$$xwy[°] = \frac{xwy_{45°} + xwy_{135°} + xwy_{225°} + xwy_{315°}}{4}.$$

Ein Verfahren zur Bestimmung einer Abweichung zwischen den Skalen des Meßsystems in x-Richtung und in y-Richtung wird nachfolgend unter Bezugnahme auf die Figuren 6, 7 und 8 erläutert, wobei auch auf die vorangehende Beschreibung Bezug genommen wird.

Dem Verfahren liegt der Gedanke zugrunde, daß bei Gleichheit der Skalen des Meßsystems in x- und y-Richtung die Länge der sich in x-Richtung erstreckenden Diagonalen $D_1$ bei Projektion in die x-y-Ebene gleich der Länge der sich in y-Richtung erstreckenden Diagonalen $D_3$ ebenfalls nach Projektion in die x-y-Ebene sein sollte. Entsprechend kann aus einem Unterschied zwischen diesen projizierten Längen auf einen Unterschied der Skalen des Meßsystems geschlossen werden. Ein solcher Unterschied wird auch als relative lineare Positionsabweichung Δ(yty-xtx) bezeichnet und berechnet sich nach der folgenden Formel

$$\Delta(yty - xtx)\left[\frac{mm}{m}\right] = \left[\frac{\sqrt{D_3{}^2 - \Delta Z^2} + \sqrt{D_4{}^2 - \Delta Z^2}}{2} - \frac{\sqrt{D_1{}^2 - \Delta Z^2} + \sqrt{D_2{}^2 - \Delta Z^2}}{2}\right] \cdot \frac{1000}{K}.$$

Hierin ist K das Mittel der Längen der in die x-y-Ebene projizierten Diagonalen $D_1$, $D_2$, $D_3$ und $D_4$.

Auch die vorangehend beschriebene Berechnung basiert auf den Längen der Diagonalen $D_1$ ... $D_4$ zwischen Punkten, welche als Symmetriepunkte zwischen vermessenen Kugelzentren bestimmt werden. Ebenso ist es allerdings möglich, Drehstellungen auszuwählen, in denen die Kugelzentren in etwa auf der x-z-Ebene bzw. der y-z-Ebene angeordnet sind und zwischen diesen bestimmten Kugelzentren entsprechende Diagonalen zu berechnen, um hieraus die lineare Positionsabweichung Δ(yty-xtx) zu bestimmen.

Nachfolgend werden Varianten der in den Figuren 1 bis 9 erläuterten Ausführungsformen dargestellt. Hinsichtlich ihres Aufbaus und ihrer Funktion einander entsprechende Komponenten sind mit den Bezugszahlen aus den Figuren 1 bis 9, zur Unterscheidung jedoch mit einem zusätzlichen Buchstaben versehen. Zur Erläuterung wird auf die gesamte vorangehende Beschreibung jeweils Bezug genommen.

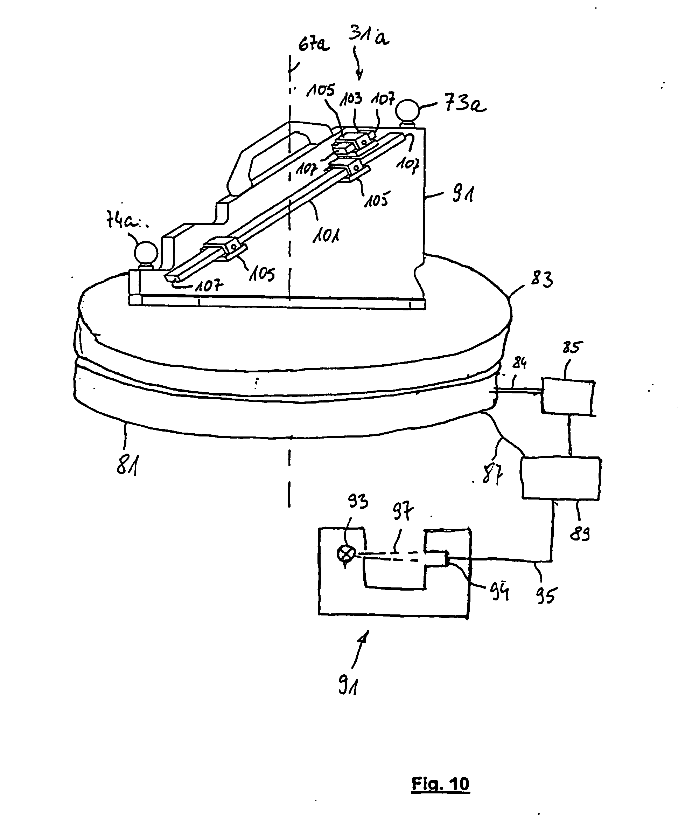

Ein in Figur 10 gezeigtes Testobjekt 31a ist besonders geeignet zur Ausführung der vorangehend erläuterten Verfahren für Koordinatenmeßgeräte, welche selbst keinen Drehtisch aufweisen. Ferner ist der Einsatz des Testobjekts 31a auch vorteilhaft zur Bestimmung von Eigenschaften von Koordinatenmeßgeräten, welche selbst einen Drehtisch aufweisen, wobei allerdings die Eigenschaften in Teilen des Meßvolumens des Koordinatenmeßgeräts zu bestimmen sind, welche außerhalb des Bereichs des Drehtischs des Koordinatenmeßgeräts liegen. Es kann dann das in Figur 10 gezeigte Testobjekt 31a in solchen Bereichen plaziert werden, um dort die Kugelzentren auszumessen, wie dies vorangehend beschrieben wurde.

Das Testobjekt 31a weist einen Fuß 81 zur Anordnung auf der Werkstückhalterung oder anderweitig im Meßvolumen des Koordinatenmeßgeräts auf. Relativ zu dem Fuß ist eine Platte 83 um eine Drehachse 87a drehbar, wobei zur Ausführung der Drehung ein motorischer Antrieb 85 vorgesehen ist, welcher ein in Figur 10 symbolisch dargestelltes Getriebe 84 zwischen Fuß 81 und Platte 83 antreibt. Ferner ist ein in den Fuß integriertes Sensorsystem vorgesehen, um die Drehstellung zwischen den Komponenten 83 und 81 zu vermessen und über eine Leitung 87 an eine Steuerung 89 für den Antrieb 85 zu melden.

Auf der Platte 83 ist eine Halterung 91 für zwei hochpräzise gefertigte Kugeln 73a und 74a vorgesehen, welche, wie dies vorangehend im Zusammenhang mit Figur 4 bereits beschrieben wurde, entlang der Drehachse 67a versetzt zueinander und bezüglich dieser diametral gegenüberliegend angeordnet sind.

Die Kugeln 73a und 74a werden gemäß den vorangehend beschriebenen Verfahren mit der Tastspitze des Koordinatenmeßgeräts angetastet, um daraus die Kugelzentren zu bestimmen und um aus mehreren Messungen der Kugelzentren die gewünschten Eigenschaften des Koordinatenmeßgeräts zu bestimmen.

Die Ausführung dieser Verfahren beinhaltet das Positionieren der Kugeln 73a und 74a in verschiedenen Drehstellungen bezüglich der Drehachse 67a. Hierzu ist es möglich, daß die Steuerung 89 die gewünschten Drehstellungen durch Eingabe eines Benutzers mitgeteilt bekommt, oder daß eine Datenleitung vorgesehen ist, über welche die Steuerung 89 die gewünschte Drehstellung von einer Steuerung des Koordinatenmeßgeräts, welche das Verfahren ausführt, übermittelt bekommt. Zur Bereitstellung einer solchen Datenleitung ist allerdings ein Eingriff in bestehende Koordinatenmeßgeräte notwendig. Deshalb weist das Testobjekt 31a eine Eingabemöglichkeit zur Ansteuerung der Steuerung 89 auf, welche keine Leitungsverbindung zwischen der Steuerung des Koordinatenmeßgeräts und der Steuerung 89 des Testobjekts 31a benötigt.

Diesem Eingabemittel liegt der Gedanke zugrunde, daß das Koordinatenmeßgerät hier durch die Bewegung seiner eigenen Komponenten auch Information an die Steuerung 89 des Testobjekts übermitteln kann, welche Information die anzufahrenden Drehstellungen und sonstiges enthalten kann. Das Eingabemittel 91 weist eine Lichtquelle 93 und einen Photosensor 94 auf, der Licht der Lichquelle 93 empfängt und ein der Lichtintensität entsprechendes Signal über eine Leitung 95 an die Steuerung 89 übermittelt. Ein Lichtweg 97 zwischen der Lichtquelle 93 und dem Lichtsensor 94 durchläuft einen Raum, in welchem sich die Tastspitze des Meßkopfes des Koordinatenmeßgeräts bewegen kann. Somit hat das Koordinatenmeßgerät die Möglichkeit durch Bewegung seiner Tastspitze und Unterbrechen des Lichtwegs 97 Information an die Steuerung 89 des Testobjekts 31a zu übermitteln. Die Übermittlung dieser Information kann durch übliche Methoden codiert sein, wie etwa mehrmaliges Unterbrechen des Lichtwegs mit jeweils unterschiedlichen Zeitabständen zwischen aufeinanderfolgenden Unterbrechungen.

Neben den beiden Kugeln 73a und 74a, welche durch den Taststift des Koordinatenmeßgeräts abgetastet werden, weist das Testobjekt 31a noch zwei mit hoher Präzision gefertigte Endmaße 101 und 103 auf, welche an der Halterung 91 mittels Fixiervorrichtungen 105 festgemacht sind. Jedes Endmaß 101 bzw. 103 weist jeweils zwei voneinander wegweisende Endflächen 107 auf, wobei ein Abstand zwischen den beiden Endflächen 107 eines jeden Endmaßes 101, 103 mit hoher Präzision bekannt ist. Die beiden Endmaße 101 und 103 weisen unterschiedliche Längen, das heißt Abstände zwischen den jeweils entgegengesetzten Endflächen 107 auf. Die beiden Endmaße 101 und 103 sind dabei jeweils derart an der Halterung 91 festgemacht, daß sie sich in etwa parallel zu einer Verbindungsgeraden zwischen den Zentren der Kugeln 73a und 74a erstrecken.

Die Endmaße 101 und 103 sind dazu vorgesehen, um den Abstand zwischen den Zentren der Kugeln 73a und 74a zu, kalibrieren. Mit Hilfe der kalibrierten Abstände zwischen den Kugeln 73 und 74 kann die Genauigkeit bei der Bestimmung der vorangehend erläuterten Eigenschaften des Koordinatenmeßgeräts, in deren Berechnung der Abstand zwischen den Kugeln eingeht, wesentlich erhöht werden. Insbesondere sind dies die vorangehend geschilderten Längen der Diagonalen $D_5$, $D_6$, $D_7$ und $D_8$. Insbesondere ist es jedoch auch möglich, nicht nur die relative lineare Positionsabweichung $\Delta(yty\text{-}xtx)$ zu bestimmen, sondern auch die Skalen in x-Richtung, y-Richtung und z-Richtung separat und absolut zu überprüfen. Die entsprechenden Positionsabweichungen xTx und yTy bzw. zTz werden berechnet, indem in verschiedenen Drehstellungen die kalibrierte Strecke zwischen den beiden Bezugspunkten auf die x-, y- bzw. z-Richtung projiziert werden.

In den vorangehenden Ausführungsbeispielen wurde als Abstand der Testkörper von der Drehachse sowie als Abstand der beiden Testkörper voneinander in Richtung der Drehachse jeweils ein Wert von 206mm angegeben. Es ist jedoch auch möglich, hierfür andere Werte und insbesondere für den Abstand von der Drehachse und für den Abstand der Kugeln in Richtung der Drehachse jeweils unterschiedliche Werte zu wählen.

Zur Einmessung der Drehtischachse wurde in den vorangehenden Ausführungsformen angegeben, daß zunächst für einen jeden Testkörper separat ein Zentrum bestimmt wird und dann die Drehachse als die Gerade berechnet wird, die durch die bestimmten Zentren verläuft. Es ist jedoch auch möglich, hierzu andere Berechnungsmethoden einzusetzen. So kann beispielsweise zu den bestimmten Bezugspunkten sämtlicher Testkörper eine rotationssymmetrische Fläche bestimmt werden, auf welcher sämtliche bestimmte Bezugspunkte in etwa angeordnet sind. Die Symmetrieachse der so angepaßten und optimierten rotationssymmetrischen Fläche entspricht dann der Drehachse.

**Patentansprüche**

1. Verfahren zum Bestimmen von Eigenschaften eines Koordinatenmeßgeräts durch Antasten eines Testobjekts, wobei das Koordinatenmeßgerät

- eine Basis (25),
- eine bezüglich der Basis (25) in drei Raumrichtungen (x, y, z) verlagerbare Tastspitze (64) zum Antasten eines Werkstücks,
- zur Verlagerung der Tastspitze (64) einen bezüglich der Basis (25) in eine y-Richtung verschiebbaren ersten Träger (37), einen bezüglich der Basis (25) in eine x-Richtung verschiebbaren zweiten Träger (45) und einen bezüglich der Basis (25) in eine z-Richtung verschiebbaren dritten Träger (55) aufweist, an dem die Tastspitze (64) gehaltert ist, und
- ein Sensorsystem (43, 51, 59) zur Ermittlung von Koordinaten der Tastspitze (64) in einem bezüglich der Basis (25) festgelegten Koordinatensystem, und
- eine bezüglich der Basis (25) um eine Drehachse (67) drehbare Werkstückhalterung (29) zur Halterung des anzutastenden Werkstücks,

umfaßt;

- wobei die Drehachse (67) sich in etwa parallel zur z-Richtung erstreckt,
- wobei die x-Richtung, die y-Richtung und die z-Richtung sich paarweise in etwa orthogonal zueinander erstrecken,
- wobei eine x-z-Ebene durch die x-Richtung und die z-Richtung aufgespannt ist, wobei eine y-z-Ebene durch die y-Richtung und die z-Richtung aufgespannt ist; und

wobei das Testobjekt (31)

- wenigstens zwei Testkörper (73, 74) umfaßt, und
- ein jeder Testkörper (73, 74) eine solche Oberfläche aufweist, daß durch Antasten der Oberfläche mit der Tastspitze (64) Koordinaten von wenigstens einem bezüglich der Oberfläche des Testkörpers (73, 74) fest angeordneten Bezugspunkt ($K_o$, $K_u$) des Testkörpers im Koordinatensystem der Basis bestimmbar sind, und wobei des Verfahren umfaßt:
- es wird das Testobjekt (31) derart an der Werkstückhalterung angebracht wird, daß zwei Testkörper (73, 74) sich bezüglich der Drehachse (67) in etwa diametral mit Abstand gegenüberliegen und in Achsrichtung einen Abstand (L) voneinander aufweisen,
- es werden in mehreren Drehstellungen die Bezugspunkte bestimmt, und
- es werden aus den bestimmten Bezugspunkten die Eigenschaften des Koordinatenmeßgeräts berechnet,

**dadurch gekennzeichnet, daß** das Verfahren ferner umfaßt:

(A)

- es wird für einen jeden Testkörper ein erster Punktsatz aus Punkten im Koordinatensystem der Basis bestimmt, wobei die Punkte des ersten Punktsatzes

(a) entweder zwei Punkte ($S_{23o}$, $S_{41o}$, $S_{23u}$, $S_{41u}$) umfassen, die in etwa auf einer die Drehachse (67) in einem Meßvolumen schneidenden x-z-Ebene
(b) oder zwei Punkte ($S_{34o}$, $S_{12o}$, $S_{34u}$, $S_{12u}$) umfassen, die in etwa auf einer die Drehachse (67) in dem Meßvolumen schneidenden y-z-Ebene

liegen und einander bezüglich der Drehachse (67) mit in etwa gleichem Abstand gegenüberliegen,
- es wird eine Abweichung (xwz; yzw)

(a) des Winkels zwischen der x-Richtung und der z-Richtung vom rechten Winkel beziehungsweise
(b) des Winkels zwischen der y-Richtung und der z-Richtung vom rechten Winkel in Abhängigkeit von den Punkten der ersten Punktsätze berechnet; oder

(B)

- es wird ein zweiter Punktsatz aus Punkten im Koordinatensystem der Basis bestimmt, wobei der zweite Punktsatz die Punkte umfaßt, die den Bezugspunkten zweier Testkörper in jeweils wenigstens zwei verschiedenen Drehstellungen entsprechen, in denen Verbindungslinien zwischen den beiden Testkörpern in Projektion auf die x-y-Ebene orthogonal zueinander und jeweils unter etwa unter 45° zur y-z-Ebene orientiert sind,
- es wird eine Abweichung (xwy) des Winkels zwischen der x-Richtung und der y-Richtung vom rechten Winkel in Abhängigkeit von den Punkten des zweiten Punktsatzes berechnet; oder

(C)

- es wird für einen jeden Testkörper ein dritter Punktsatz aus Punkten im Koordinatensystem der Basis bestimmt, wobei die Punkte des dritten Punktsatzes einen Punkt, der in etwa auf einer die Drehachse in einem Meßvolumen schneidenden x-z-Ebene liegt, und einen Punkt umfassen, der in etwa auf einer die Drehachse in dem Meßvolumen schneidenden y-z-Ebene liegt,
- es wird eine Abweichung ($\Delta$(yty-xtx)) zwischen Skalen des Meßsystems in x-Richtung und in y-Richtung in Abhängigkeit von den Punkten der dritten Punktsätze berechnet.

2. Verfahren zum Bestimmen von Eigenschaften eines Koordinatenmeßgeräts durch Antasten eines Testobjekts, wobei das Koordinatenmessgerät

- eine Basis,
- eine bezüglich der Basis in drei Raumrichtungen verlagerbare Tastspitze zum Antasten eines Werkstücks,
- zur Verlagerung der Tastspitze einen bezüglich der Basis in eine y-Richtung verschiebbaren ersten Träger, einen bezüglich der Basis in eine x-Richtung verschiebbaren zweiten Träger und einen bezüglich der Basis in eine z-Richtung verschiebbaren dritten Träger, an dem die Tastspitze gehaltert ist,
- ein Sensorsystem zur Ermittlung von Koordinaten der Tastspitze in einem bezüglich der Basis festgelegten Koordinatensystem, und
- eine Werkstückhalterung zur Halterung des anzutastenden Werkstücks, umfaßt,
- wobei die x-Richtung, die y-Richtung und die z-Richtung sich paarweise in etwa orthogonal zueinander erstrecken,
- wobei eine x-z-Ebene durch die x-Richtung und die z-Richtung aufgespannt ist, wobei eine y-z-Ebene durch die y-Richtung und die z-Richtung aufgespannt ist;

wobei das Testobjekt (31a)

- einen Fuß (81) zur Anbringung an der Werkstückhalterung und
- eine relativ zu dem Fuß um eine Drehachse (67a) drehbare Baugruppe (83, 91) mit wenigstens zwei Testkörpern (73a, 74a) umfaßt,

wobei

- ein jeder Testkörper (73a 74a) eine solche Oberfläche aufweist, daß durch Antasten der Oberfläche mit der Tastspitze Koordinaten von wenigstens einem bezüglich der Oberfläche des Testkörpers fest angeordneten Bezugspunkt des Testkörpers im Koordinatensystem der Basis bestimmbar sind, und
- die wenigstens zwei Testkörper in Richtung der Drehachse (67a) einen Abstand voneinander aufweisen und bezüglich der Drehachse (67a) im wesentlichen diametral gegenüberliegend angeordnet sind; und

wobei das Verfahren umfaßt:

- es wird das Testobjekt an der Werkstückhalterung derart angebracht, daß die Drehachse in etwa parallel zur z-Richtung verläuft;
- es werden in mehreren Drehstellungen die Bezugspunkte bestimmt, und
- es werden aus den bestimmten Bezugspunkten die Eigenschaften des Koordinatenmeßgeräts berechnet, und

**dadurch gekennzeichnet, daß** das Verfahren ferner umfaßt:

(A)

- es wird für einen jeden Testkörper ein erster Punktsatz aus Punkten im Koordinatensystem der Basis bestimmt, wobei die Punkte des ersten Punktsatzes

(a) entweder zwei Punkte ($S_{23o}$, $S_{41o}$, $S_{23u}$, $S_{41u}$) umfassen, die in etwa auf einer die Drehachse (67) in einem Meßvolumen schneidenden x-z-Ebene
(b) oder zwei Punkte ($S_{34o}$, $S_{12o}$, $S_{34u}$, $S_{12u}$) umfassen, die in etwa auf einer die Drehachse (67) in dem Meßvolumen schneidenden y-z-Ebene

liegen und einander bezüglich der Drehachse (67) mit in etwa gleichem Abstand gegenüberliegen,
- es wird eine Abweichung (xwz; yzw)

(a) des Winkels zwischen der x-Richtung und der z-Richtung vom rechten Winkel beziehungsweise
(b) des Winkels zwischen der y-Richtung und der z-Richtung vom rechten Winkel

in Abhängigkeit von den Punkten der ersten Punktsätze berechnet; oder

(B)

- es wird ein zweiter Punktsatz aus Punkten im Koordinatensystem der Basis bestimmt, wobei der zweite Punktsatz die Punkte umfaßt, die den Bezugspunkten zweier Testkörper in jeweils wenigstens zwei verschiedenen Drehstellungen entsprechen, in denen Verbindungslinien zwischen den beiden Testkörpern in Projektion auf die x-y-Ebene orthogonal zueinander und jeweils unter etwa unter 45° zur y-z-Ebene orientiert sind,
- es wird eine Abweichung (xwy) des Winkels zwischen der x-Richtung und der y-Richtung vom rechten Winkel in Abhängigkeit von den Punkten des zweiten Punktsatzes berechnet; oder

(C)

- es wird für einen jeden Testkörper ein dritter Punktsatz aus Punkten im Koordinatensystem der Basis bestimmt, wobei die Punkte des dritten Punktsatzes einen Punkt, der in etwa auf einer die Drehachse in einem Meßvolumen schneidenden x-z-Ebene liegt, und einen Punkt umfassen, der in etwa auf einer die Drehachse in dem Meßvolumen schneidenden y-z-Ebene liegt,
- es wird eine Abweichung ($\Delta(yty\text{-}xtx)$) zwischen Skalen des Meßsystems in x-Richtung und in y-Richtung in Abhängigkeit von den Punkten der dritten Punktsätze berechnet.

3. Verfahren nach Anspruch 1 oder 2, wobei die Bestimmung der Eigenschaften eine Bestimmung einer Abweichung eines Winkels zwischen einer der Richtungen x-Richtung, y-Richtung und z-Richtung vom Rechten Winkel, eine Bestimmung einer relativen Abweichung zwischen Skalen des Meßsystems in den jeweiligen Richtungen und eine Bestimmung einer absoluten Abweichung von Skalen des Meßsystems in den jeweiligen Richtungen bezüglich eines Normals umfaßt.

4. Verfahren nach Anspruch 1 oder 2, wobei das Verfahren umfaßt:

(A)

- es wird für einen jeden Testkörper der erste Punktsatz aus Punkten im Koordinatensystem der Basis bestimmt,

wobei Abstände ($D_1$, $D_2$; $D_3$, $D_4$) zwischen einander bezüglich der Drehachse gegenüberliegenden und verschiedenen Testkörpern zugeordneten Punkten der ersten Punktsätze berechnet werden und die Abweichungen (xwz; ywz) in Abhängigkeit der berechneten Abstände berechnet werden.

5. Verfahren nach Anspruch 4, wobei in zwei Drehstellungen, in denen eine Verbindungslinie zwischen den beiden Testkörpern

(a) in etwa in der x-z-Ebene beziehungsweise
(b) in etwa in der y-z-Ebene

liegt, jeweils die Bezugspunkte der Testkörper bestimmt werden und der erste Punktsatz die den Bezugspunkten der Testkörper in diesen Drehstellungen entsprechenden Punkte umfaßt.

6. Verfahren nach Anspruch 4, wobei in zwei oder in vier verschiedenen Drehstellungen, in denen eine Verbindungslinie zwischen den beiden Testkörpern in Projektion auf die x-y-Ebene jeweils unter etwa 45° zur y-z-Ebene orientiert ist, jeweils die Bezugspunkte ($K_{1o}$ ... $K_{4o}$, $K_{1u}$ ... $K_{4u}$) der Testkörper (73, 74) bestimmt werden, und wobei der erste Punktsatz jeweils Symmetriepunkte ($S_{23o}$, $S_{41o}$, $S_{23u}$, $S_{41u}$; $S_{34o}$, $S_{12o}$, $S_{34u}$, $S_{12u}$) bezüglich Paaren der in diesen Drehstellungen bestimmten Bezugspunkte umfaßt.

7. Verfahren nach einem der Ansprüche 1 bis 6, wobei das Verfahren umfaßt:

   (B)

      - es wird der zweite Punktsatz aus Punkten im Koordinatensystem der Basis bestimmt,

   wobei Abstände ($D_5$, $D_6$, $D_7$, $D_8$) zwischen einander bezüglich der Drehachse gegenüberliegenden und verschiedenen Testkörpern zugeordneten Punkten des zweiten Punktsatzes berechnet werden und die Abweichungen in Abhängigkeit der berechneten Abstände berechnet werden.

8. Verfahren nach einem der Ansprüche 1 bis 7, wobei das Verfahren umfaßt:

   (C)

      - es wird für einen jeden Testkörper der dritte Punktsatz aus Punkten im Koordinatensystem der Basis bestimmt,

   wobei Abstände ($D_1$, $D_2$, $D_3$, $D_4$) zwischen einander bezüglich der Drehachse gegenüberliegenden und verschiedenen Testkörpern zugeordneten Punkten des dritten Punktsatzes berechnet werden und die Abweichungen in Abhängigkeit der berechneten Abstände berechnet werden.

9. Verfahren nach Anspruch 8, wobei in einer Drehstellung, in der eine Verbindungslinie zwischen den beiden Testkörpern in etwa in der x-z-Ebene liegt, und in einer Drehstellung, in der eine Verbindungslinie zwischen den beiden Testkörpern in etwa in der y-z-Ebene liegt, jeweils die Bezugspunkte der Testkörper bestimmt werden und die dritten Punktsätze die den Bezugspunkten der Testkörper in diesen Drehstellungen entsprechenden Punkte umfassen.

10. Verfahren nach Anspruch 8, wobei in wenigstens drei verschiedenen Drehstellungen, in denen eine Verbindungslinie zwischen den beiden Testkörpern in Projektion auf die x-y-Ebene jeweils unter etwa 45° zur y-z-Ebene orientiert ist, jeweils die Bezugspunkte ($K_{1o}$ ... $K_{4o}$, $K_{1u}$ ... $K_{4u}$) der Testkörper bestimmt werden, und wobei die dritten Punktsätze jeweils Symmetriepunkte ($S_{23o}$, $S_{41o}$, $S_{23u}$, $S_{41u}$; $S_{34o}$, $S_{12o}$, $S_{34u}$, $S_{12u}$) bezüglich Paaren der in diesen Drehstellungen bestimmten Bezugspunkte umfassen.

11. Verfahren nach einem der Ansprüche 8 bis 10, wobei das Testobjekt ferner wenigstens ein Endmaß (101, 103) einer vorbestimmten Länge umfaßt, und wobei ein Abstand zwischen den Bezugspunkten zweier Testkörper (73, 74) relativ zu der Länge bestimmt wird.

12. Verfahren nach Anspruch 11, wobei das Endmaß (101, 103) sich in etwa parallel zu einer Verbindungslinie zwischen den Bezugspunkten der beiden Testkörper (73, 74) erstreckt.

**Claims**

1. A method for determining properties of a coordinate measuring device by probing a test object, wherein the coordinate measuring device comprises:

      - a base (25);
      - a probe tip (64) relocatable with reference to the base (25) in three spatial directions (x, y, z) for probing a workpiece,
      - a first support (37) displaceable with reference to the base (25) in a y-direction, a second support (45) displaceable with reference to the base (25) in an x-direction, and a third support (55) displaceable with reference to the base (25) in a z-direction, on which the probe tip (64) is mounted for relocating the probe tip (64), and
- a sensor system (43, 51, 59) for determining coordinates of the probe tip (64) in a coordinate system defined with reference to the base (25), and
- a workpiece holder (29) rotatable about an axis of rotation (67) with reference to the base (25) for holding the workpiece to be probed,
- wherein the axis of rotation (67) extends approximately parallel to the z-direction,
- wherein the x-direction, the y-direction and the z-direction pairwise extend approximately orthogonally to one another,
- wherein an x-z plane is defined by the x-direction and the z-direction, wherein a y-z plane is defined by the y-direction and the z-direction, and

wherein the test object (31)

- comprises at least two test bodies (73, 74), and
- each test body (73, 74) has a surface such that by probing the surface with the probe tip (64) coordinates of at least one reference point ($K_0$, $K_u$) of the test body that is fixedly arranged with reference to the surface of the test body (73, 74) are determinable in the coordinate system of the base, and

wherein the method comprises:

- the test object (31) is fitted to the workpiece holder such that two test bodies (73, 74) are spaced apart approximately diametrically opposite one another with respect to the axis of rotation (67), and have distance (L) from one another in the direction of the axis,
- the reference points are determined in a plural rotational positions, and
- the properties of the coordinate measuring device are calculated from the reference points determined,

**characterised in that** the method further comprises:

(A)

- a first set of points is determined for each test body from points in the coordinate system of the base, wherein the points of the first set of points

(a) either comprise two points ($S_{23o}$, $S_{41o}$, $S_{23u}$, $S_{41u}$) that lie approximately on an x-z plane intersecting the axis of rotation (67) in a measurement volume,
(b) or comprise two points ($S_{34o}$, $S_{12o}$, $S_{34u}$, $S_{12u}$), that lie approximately on a y-z plane intersecting the axis of rotation (67) in the measurement volume,

and that lie opposite one another with respect to the axis of rotation (67) at approximately the same distance,
- a deviation (xwz; yzw)

(a) of the angle between the x-direction and the z-direction from a right angle, or
(b) of the angle between the y-direction and the z-direction from a right angle,

is calculated in dependence of the points of the first set of points; or

(B)

- a second set of points is determined from points in the coordinate system of the base, wherein the second set of points comprises the points that correspond to the reference points of two test bodies in each of at least two different rotational positions, in which connecting lines between the two test bodies, when projected onto the x-y plane, are oriented orthogonally to one another, and in each case at approximately 45° to the y-z plane,
- a deviation (xwy) of the angle between the x-direction and the y-direction from a right angle is calculated in dependence of the points of the second set of points, or

(C)

- a third set of points is determined for each test body from points in the coordinate system of the base, wherein the points of the third set of points comprise a point that lies approximately on an x-z plane intersecting the axis of rotation in a measurement volume, and a point that lies approximately on a y-z plane intersecting the axis of rotation in a measurement volume,

- a deviation ($\Delta$(yty-xtx)) between scales of the measurement system in the x-direction and the y-direction is calculated in dependence of the points of the third set of points.

2. A method for determining properties of a coordinate measuring device by probing a test object, wherein the coordinate measuring device comprises:

- a base,
- a probe tip that is relocatable with reference to the base in three spatial directions for probing a workpiece,
- a first support displaceable with reference to the base in a y-direction, a second support displaceable with reference to the base in an x-direction, and a third support displaceable with reference to the base in a z-direction, on which the probe tip is mounted for relocating the probe tip, and
- a sensor system for determining coordinates of the probe tip in a coordinate system defined with reference to the base, and
- a workpiece holder for holding the workpiece to be probed,
- wherein the x-direction, the y-direction and the z-direction pairwise extend approximately orthogonally to one another,
- wherein an x-z plane is defined by the x-direction and the z-direction, wherein a y-z plane is defined by the y-direction and the z-direction;

wherein the test object (31a) comprises

- a foot (81) for being fitted to the workpiece holder, and
- a module (83, 91) with at least two test bodies (73a, 74a) rotatable relative to the foot around a axis of rotation (67a),

wherein

- each test body (73a, 74a) has a surface such that by probing the surface with the probe tip coordinates of at least one reference point of the test body that is fixedly arranged with reference to the surface of the test body can be determined in the coordinate system of the base, and
- the at least two test bodies have a distance from one another in the direction of the axis of rotation (67a), and are arranged essentially diametrically opposite to one another with reference to the axis of rotation (67a) ; and

wherein the method comprises:

- the test object is fitted to the workpiece holder such that the axis of rotation extends approximately parallel to the z-direction;
- the reference points are determined in plural rotational positions, and
- the properties of the coordinate measuring device are calculated from the reference points determined, and

**characterised in that** the method further comprises:

(A)

- a first set of points is determined for each test body from points in the coordinate system of the base, wherein the points of the first set of points

(a) either comprise two points (S23o, S41o, S23u, S41u) that lie approximately on an x-z plane intersecting the axis of rotation (67) in a measurement volume,
(b) or comprise two points (S34o, S12o, S34u, S12u), that lie approximately on a y-z plane intersecting the axis of rotation (67) in a measurement volume,

and which lie opposite one another with respect to the axis of rotation (67) at approximately the same distance,

16

- a deviation (xwz; yzw)

    (a) of the angle between the x-direction and the z-direction from a right angle,
    (b) of the angle between the y-direction and the y-direction from a right angle,

is calculated in dependence of the points of the first set of points, or

(B)

    - a second set of points is determined from points in the coordinate system of the base, wherein the second set of points comprises the points that correspond to the reference points of two test bodies in each of at least two different rotational positions, in which connecting lines between the two test bodies, when projected onto the x-y plane, are oriented orthogonally to one another, and in each case at approximately 45° to the y-z plane,
    - a deviation (xwy) of the angle between the x-direction and the y-direction from a right angle is calculated in dependence of the points of the second set of points, or

(C)

    - a third set of points is determined for each test body from points in the coordinate system of the base, wherein the points of the third set of points comprise a point that lies approximately on an x-z plane intersecting the axis of rotation in a measurement volume, and a point that lies approximately on a y-z plane intersecting the axis of rotation in a measurement volume,
    - a deviation ($\Delta$(yty-xtx)) between scales of the measurement system in the x-direction and the y-direction is calculated in dependence of the points of the third set of points.

3. The method in accordance with Claim 1 or 2, wherein the determination of the properties comprises a determination of a deviation of an angle between one of the directions: x-direction, y-direction and z-direction from a right angle, a determination of a relative deviation between scales of the measurement system in the respective directions, and a determination of an absolute deviation of scales of the measurement system in the respective directions with reference to a normal.

4. The method according to Claim 1 or 2, wherein the method comprises:

(A)

    - the first set of points being determined for each test body from points in the coordinate system of the base,

wherein distances ($D_1$, $D_2$; $D_3$, $D_4$) are calculated between points of the first set of points assigned to different test bodies lying opposite one another with respect to the axis of rotation, and the deviations (xwz; ywz) are calculated in dependence of the calculated distances.

5. The method in accordance with Claim 4, wherein in two rotational positions, in which a connecting line between the two test bodies lies

    (a) approximately in the x-z plane, or
    (b) approximately in the y-z plane

the reference points of the test bodies are determined in each case and the first set of points comprises the points corresponding to the reference points of the test bodies in these rotational positions.

6. The method in accordance with Claim 4, wherein in two or in four different rotational positions, in which a connecting line between the two test bodies, when projected onto the x-y plane, is in each case oriented at approximately 45° to the y-z plane, the reference points ($K_{1o}$ ... $K_{4o}$, $K_{1u}$ ... $K_{4u}$) of the test bodies (73, 74) are in each case determined, and wherein the first set of points comprises in each case points of symmetry ($S_{23o}$, $S_{41o}$, $S_{23u}$, $S_{41u}$; $S_{34o}$, $S_{12o}$, $S_{34u,}$ $S_{12u}$) with respect to pairs of reference points determined in these rotational positions.

7. The method according to one of the Claims 1 to 6, wherein the method comprises:

(B)

- the second set of points is determined from points in the coordinate system of the base,

wherein distances ($D_5$, $D_6$, $D_7$, $D_8$) are calculated between points of the second set of points assigned to different test bodies lying opposite one another with respect to the axis of rotation, and the deviations are calculated in dependence of the calculated distances.

**8.** The method according to one of the Claims 1 to 7, wherein the method comprises:

(C)

- the third set of points is determined for each test body from points in the coordinate system of the base,

wherein distances ($D_1$, $D_2$; $D_3$, $D_4$) are calculated between points of the first set of points assigned to different test bodies lying opposite one another with respect to the axis of rotation, and the deviations are calculated in dependence of the calculated distances.

**9.** The method in accordance with Claim 8, wherein in a rotational position in which a connecting line between the two test bodies lies approximately in the x-z plane and in a rotational position, in which a connecting line between the two test bodies lies approximately in the y-z plane, the reference points of the test bodies are in each case determined and the third set of points comprises the points corresponding to the reference points of the test bodies in these rotational positions.

**10.** The method in accordance with Claim 8, wherein in at least three different rotational positions in which a connecting line between the two test bodies, when projected onto the x-y plane, is in each case oriented at approximately 45° to the y-z plane the reference points ($K_{1o}$ ... $K_{4o}$, $K_{1u}$ ... $K_{4u}$) of the test bodies are in each case determined, and wherein the third set of points comprises in each case points of symmetry ($S_{23o}$, $S_{41o}$, $S_{23u}$, $S_{41u}$; $S_{34o}$, $S_{12o}$, $S_{34u}$, $S_{12u}$) with respect to pairs of reference points determined in these rotational positions.

**11.** The method according to one of the Claims 8 to 10, wherein the test object further comprises at least one gauge block (101, 103) of a predetermined length, and wherein a distance is determined between the reference points of two test bodies (73, 74) relative to the length.

**12.** The method in accordance with Claim 11, wherein the gauge block (101, 103) extends approximately parallel to a connecting line between the reference points of the two test bodies (73, 74).

**Revendications**

**1.** Procédé de détermination de propriétés d'un instrument de mesure de coordonnées, par contact d'un objet de test, dans lequel l'instrument de mesure de coordonnées comporte :

- une base (25),
- une pointe de contact (64) pouvant être déplacée dans trois directions spatiales (x, y, z) par rapport à la base (25),
- pour le déplacement de la pointe de contact (64), un premier support (37) pouvant coulisser par rapport à la base (25) dans une direction y, un second support (45) pouvant coulisser par rapport à la base (25) dans une direction x, et un troisième support (55) pouvant coulisser par rapport à la base (25) dans une direction z, au niveau duquel est retenue la pointe de contact (64), et
- un système de capteur (43, 51, 59) permettant de déterminer les coordonnées de la pointe de contact (64) dans un système de coordonnées fixe par rapport à la base (25), et
- un support de pièce (29), pouvant pivoter par rapport à la base (25) autour d'un axe de rotation (67) et destiné à retenir la pièce à approcher par contact ;
- dans lequel l'axe de rotation (67) s'étend approximativement parallèlement à la direction z,
- dans lequel la direction x, la direction y et la direction z s'étendent de façon approximativement orthogonale deux à deux,
- dans lequel un plan x-z est formé par la direction x et la direction z, dans lequel un plan y-z est formé par la direction y et la direction z ; et

dans lequel l'objet de test (31)

- comporte au moins deux corps de test (73, 74), et
- chacun des corps de test (73, 74) présente une surface telle que par contact de la surface avec la pointe de contact (64), on peut déterminer les coordonnées d'au moins un point de référence ($K_o$, $K_u$) du corps de test, disposé de façon fixe par rapport à la surface du corps de test (73, 74), dans le système de coordonnées de la base, et

dans lequel le procédé comprend les étapes suivantes :

- l'objet de test (31) est appliqué sur le support de pièce de façon telle que deux corps de test (73, 74) sont situés de façon approximativement diamétralement opposée par rapport à l'axe de rotation (67), avec un écart, et présentent dans la direction axiale un écart (L) entre eux,
- on détermine les points de référence dans plusieurs positions de rotation, et
- à partir des points de référence déterminés, on calcule les propriétés de l'instrument de mesure de coordonnées,

**caractérisé en ce que** le procédé comprend en outre les étapes suivantes :

(A)

- pour chacun des corps de test, on détermine un premier jeu de points à partir de points dans le système de coordonnées de la base, les points du premier jeu de points comportant

(a) soit deux points ($S_{23o}$, $S_{41o}$, $S_{23u}$, $S_{41u}$) qui reposent approximativement dans le plan x-z coupant l'axe de rotation (67) dans un volume de mesure,
(b) soit deux points ($S_{34o}$, $S_{12o}$, $S_{34u}$, $S_{12u}$) qui reposent approximativement dans le plan y-z coupant l'axe de rotation (67) dans un volume de mesure,

et étant opposés par rapport à l'axe de rotation (67), avec un écart approximativement identique,
- on calcule une déviation (xwz ; yzw)

(a) de l'angle entre la direction x et la direction z par rapport à l'angle droit, ou
(b) de l'angle entre la direction y et la direction z par rapport à l'angle droit ;

en fonction des points des premiers jeux de points ;
ou
(B)

- on détermine un deuxième jeu de points à partir de points dans le système de coordonnées de la base, où le second jeu de points comprend les points qui correspondent aux points de référence de deux corps de test dans respectivement au moins deux positions de rotation différentes, dans lesquelles les lignes de jonction entre les deux corps de test sont orientées orthogonalement l'une à l'autre en projection sur le plan x-y et respectivement selon environ 45° par rapport au plan y-z,
- on calcule une déviation (xwy) de l'angle entre la direction x et la direction y par rapport à l'angle droit en fonction des points du second jeu de points ; ou

(C)

- on détermine pour chacun des corps de test un troisième jeu de points à partir de points dans le système de coordonnées de la base, les points du troisième jeu de points comportant un point qui repose approximativement dans le plan x-z coupant l'axe de rotation dans un volume de mesure, et un point qui repose approximativement dans un plan y-z coupant l'axe de rotation dans le volume de mesure,
- on calcule une déviation ($\Delta$(yty-xtx)) entre les échelles du système de mesure dans la direction x et dans la direction y, en fonction des points du troisième jeu de points.

2. Procédé de détermination de propriétés d'un instrument de mesure de coordonnées par contact d'un objet de test, dans lequel l'instrument de mesure de coordonnées comporte :

- une base,
- une pointe de contact destinée à toucher une pièce et pouvant être déplacée dans trois directions spatiales par rapport à la base,
- pour le déplacement de la pointe de contact, un premier support pouvant coulisser par rapport à la base dans une direction y, un second support pouvant coulisser par rapport à la base dans une direction x, et un troisième support pouvant coulisser par rapport à la base dans une direction z, au niveau duquel est retenue la pointe de contact,
- un système de capteur permettant de déterminer les coordonnées de la pointe de contact dans un système de coordonnées fixe par rapport à la base, et
- un support de pièce destiné à retenir la pièce à approcher par contact,
- dans lequel la direction x, la direction y et la direction z s'étendent de façon approximativement orthogonale deux à deux,
- dans lequel un plan x-z est formé par la direction x et la direction z, dans lequel un plan y-z est formé par la direction y et la direction z ;

dans lequel l'objet de test (31a) comporte

- un pied (81) à appliquer au niveau du support de pièce et
- un module (83, 91) pouvant pivoter par rapport au pied autour d'un axe de rotation (67a), comportant au moins deux corps de test (73a, 74a),

dans lequel

- chacun des corps de test (73a, 74a) présente une surface telle que par contact de la surface par la pointe de contact, on peut déterminer les coordonnées d'au moins un point de référence du corps de test, disposé de façon fixe par rapport à la surface du corps de test, dans le système de coordonnées de la base, et
- les corps de test, au moins au nombre de deux, présentent un écart entre eux dans la direction de l'axe de rotation (67a) et sont disposés par rapport à l'axe de rotation (67a) de façon essentiellement diamétralement opposée, et

dans lequel le procédé comprend les étapes suivantes :

- on applique l'objet de test sur le support de pièce de façon telle que l'axe de rotation s'étend approximativement parallèlement à la direction z ;
- on détermine les points de référence dans plusieurs positions de rotation ; et
- on calcule, à partir des points de référence déterminés, les propriétés de l'instrument de mesure de coordonnées, et

**caractérisé en ce que** le procédé comprend en outre les étapes suivantes :

(A)

- pour chacun des corps de test, on détermine un premier jeu de points à partir de points dans le système de coordonnées de la base, les points du premier jeu de points comportant

(a) soit deux points ($S_{23o}$, $S_{41o}$, $S_{23u}$, $S_{41u}$) qui reposent approximativement dans le plan x-z coupant l'axe de rotation (67) dans un volume de mesure,
(b) soit deux points ($S_{34o}$, $S_{12o}$, $S_{34u}$, $S_{12u}$) qui reposent approximativement dans le plan y-z coupant l'axe de rotation (67) dans le volume de mesure,

et étant opposés par rapport à l'axe de rotation (67) avec un écart approximativement identique,
- on calcule une déviation (xwz ; yzw)

(a) de l'angle entre la direction x et la direction z par rapport à l'angle droit,
(b) de l'angle entre la direction y et la direction z par rapport à l'angle droit ;

en fonction des points du premier jeu de points ; ou

(B)

- on détermine un deuxième jeu de points à partir de points dans le système de coordonnées de la base, où le second jeu de points comprend les points qui correspondent aux points de référence de deux corps de test dans respectivement au moins deux positions de rotation différentes, dans lesquelles les lignes de jonction entre les deux corps de test sont orientées orthogonalement l'une à l'autre en projection sur le plan x-y et respectivement selon environ 45° par rapport au plan y-z,
- on calcule une déviation (xwy) de l'angle entre la direction x et la direction y par rapport à l'angle droit en fonction des points du second jeu de points ; ou

(C)

- on détermine pour chacun des corps de test un troisième jeu de points à partir de points dans le système de coordonnées de la base, les points du troisième jeu de points comportant un point qui repose approximativement dans le plan x-z coupant l'axe de rotation dans un volume de mesure, et un point qui repose approximativement dans un plan y-z coupant l'axe de rotation dans le volume de mesure,
- on calcule une déviation ($\Delta$(yty-xtx)) entre les échelles du système de mesure dans la direction x et dans la direction y, en fonction des points du troisième jeu de points.

3. Procédé selon la revendication 1 ou 2, dans lequel la détermination des propriétés comporte une détermination d'une déviation d'un angle entre une des directions direction x, direction y et direction z, et l'angle droit, une détermination d'une déviation relative entre les échelles du système de mesure dans les directions respectives et une détermination d'une déviation absolue des échelles du système de mesure dans les directions respectives par rapport à une normale.

4. Procédé selon la revendication 1 ou 2, dans lequel le procédé comprend l'étape suivante :

(A)

- on détermine pour chacun des corps de test le premier jeu de points à partir de points dans le système de coordonnées de la base,

où des écarts ($D_1$, $D_2$ ; $D_3$, $D_4$) entre les points du premier jeu de points, opposés entre eux par rapport à l'axe de rotation et coordonnés à différents corps de test, sont calculés, et on calcule les déviations (xwz ; ywz) en fonction des écarts calculés.

5. Procédé selon la revendication 4, dans lequel dans deux positions de rotation dans lesquelles une ligne de jonction entre les deux corps de test repose,

(a) approximativement dans le plan x-z ou
(b) approximativement dans le plan y-z,

on détermine respectivement les points de référence des corps de test, et le premier jeu de points comprend les points correspondant aux points de référence des corps de test dans ces positions de rotation.

6. Procédé selon la revendication 4, dans lequel, dans deux ou dans quatre positions de rotation différentes dans lesquelles une ligne de jonction entre les deux corps de test est orientée en projection sur le plan x-y respectivement selon environ 45° par rapport au plan y-z, on détermine respectivement les points de référence ($K_{1o}$ ... $K_{4o}$, $K_{1u}$ ... $K_{4u}$) des corps de test (73, 74), et dans lequel le premier jeu de points comprend respectivement les points de symétrie ($8_{23o}$, $S_{41o}$, $S_{23u}$, $S_{41u}$ ; $S_{34o}$, $8_{12o}$ , $S_{34u}$ , $8_{12u}$) par rapport à des paires des points de référence déterminés dans ces positions de rotation.

7. Procédé selon l'une des revendications 1 à 6, dans lequel le procédé comprend l'étape suivante :

(B)

- on détermine le second jeu de points à partir de points dans le système de coordonnées de la base, où des écarts ($D_5$, $D_6$, $D_7$, $D_8$) entre des points du second jeu de points, opposés par rapport à l'axe de rotation et coordonnés à différents corps de test sont calculés, et on calcule les déviations en fonction des écarts calculés.

8. Procédé selon l'une des revendications 1 à 7, dans lequel le procédé comprend l'étape suivante :

(C)

- on détermine pour chacun des corps de test le troisième jeu de points à partir de points dans le système de coordonnées de la base,

où des écarts ($D_1$, $D_2$, $D_3$, $D_4$) entre des points du troisième jeu de points, opposés par rapport à l'axe de rotation et coordonnés à différents corps de test, sont calculés, et on calcule les déviations en fonction des écarts calculés.

9. Procédé selon la revendication 8, dans lequel dans une position de rotation dans laquelle une ligne de jonction repose entre les deux corps de test approximativement dans le plan x-z, et dans une position dans laquelle une ligne de jonction entre les deux corps de test repose approximativement dans le plan y-z, on détermine respectivement les points de référence des corps de test, et les troisièmes jeux de points comportent les points correspondant aux points de référence des corps de test dans ces positions de rotation.

10. Procédé selon la revendication 8, dans lequel dans au moins trois positions de rotation différentes, dans lesquelles une ligne de jonction entre les deux corps de test est orientée en projection sur le plan x-y respectivement selon environ 45° par rapport au plan y-z, on détermine respectivement les points de référence ($K_{1o}$ ... $K_{4o}$, $K_{1u}$ ... $K_{4u}$) des corps de test, et dans lequel les troisièmes jeux de points comportent respectivement les points de symétrie ($S_{23o}$, $S_{41o}$, $S_{23u}$, $S_{41u}$ ; $S_{34o}$ , $S_{12o}$ , $S_{34u}$, $S_{12u}$) par rapport à des paires des points de référence déterminés dans ces positions de rotation.

11. Procédé selon l'une des revendications 8 à 10, dans lequel l'objet de test comporte de plus au moins une cale-étalon (101, 103) d'une longueur prédéfinie, et dans lequel un écart entre les points de référence de deux corps de test (73, 74) est déterminé par rapport à la longueur.

12. Procédé selon la revendication 11, dans lequel la cale-étalon (101, 103) s'étend de façon approximativement parallèle à une ligne de jonction entre les points de référence des deux corps de test (73, 74).

**Fig. 1**

$Z_{KMG}$  $Z'_{KMG}$

7

$9''$  $9'$

$Y_{KMG}$

5
9

$9'''$

3

$X_{KMG}$

**Fig. 2**

24

**Fig. 3**

**Fig. 4**

**Fig. 5**

**Fig. 6**

**Fig. 7**

**Fig. 8**

**Fig. 9**

**Fig. 10**

EP 1 393 012 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4369581 A
- US 4763507 A
- US 5430948 A
- DE 4106168 A1